(19) **Europäisches Patentamt / European Patent Office / Office européen des brevets**

(11) **EP 1 815 657 B1**

(12) **FASCICULE DE BREVET EUROPEEN**

(45) Date de publication et mention
de la délivrance du brevet:
**16.11.2011 Bulletin 2011/46**

(21) Numéro de dépôt: **05857329.6**

(22) Date de dépôt: **21.11.2005**

(51) Int Cl.:
***H04L 27/26*** *(2006.01)*

(86) Numéro de dépôt international:
**PCT/FR2005/050972**

(87) Numéro de publication internationale:
**WO 2006/090033 (31.08.2006 Gazette 2006/35)**

(54) **PROCEDE ET DISPOSITIF DE COMPENSATION DE DESEQUILIBRES D'UN RECEPTEUR**

VERFAHREN UND VORRICHTUNG ZUR KOMPENSIERUNG VON EMPFÄNGERUNGLEICHGEWICHT

METHOD AND DEVICE FOR COMPENSATING A RECEIVER IMBALANCES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.11.2004 FR 0412417**

(43) Date de publication de la demande:
**08.08.2007 Bulletin 2007/32**

(73) Titulaire: **Commissariat à l'Énergie Atomique et aux Énergies Alternatives
75015 Paris (FR)**

(72) Inventeurs:
• **MORCHE, Dominique
F-38240 MEYLAN (FR)**
• **DEHOS, Cédric
F-29100 Douarnenez (FR)**

(74) Mandataire: **Poulin, Gérard et al
BREVALEX
95 rue d'Amsterdam
75378 Paris Cedex 8 (FR)**

(56) Documents cités:
**EP-A- 1 339 197     EP-A- 1 624 636
WO-A-03/003686     WO-A-03/101064
DE-A1- 10 241 679     DE-A1- 19 948 383
US-A- 5 263 196     US-A- 5 396 656
US-A1- 2003 095 589**

• **SCHUCHERT: "Verfahren der digitalen Kompensation von Unsymmetrien der analogen Quadraturmischung in OFDM-Empfängern" VOM FACHBEREICH ELEKTROTECHNIK UND INFORMATIONSTECHNIK DER BERGISCHEN UNIVERSITAET-GESAMTHOCHSCHULE WUPPERTAL ANGENOMMEME DISSERTATION ZUR ERLANGUNG DES AKADEMISCHEN GRADES EINES DOKTOR-INGENIEURS, 2001, page 141, XP002266752**
• **MA, YLAMURTO: "Analysis of IQ imbalance on initial frequency offset estimation in direct down conversion receivers" IEEE WORKSHOP ON WIRELESS COMMUNICATIONS, 20 mars 2001 (2001-03-20), pages 158-161, XP010542295 Piscataway, US**

**Description**

**DOMAINE TECHNIQUE ET ART ANTÉRIEUR**

L'invention concerne le domaine du traitement du signal.

Elle s'applique aux récepteurs radio en général.

Elle concerne notamment la synchronisation de fréquence et d'horloge et l'estimation de canal de système de réception multi porteuses, en présence de déséquilibres de gain et de phase entre les voies en phase et en quadrature de phase.

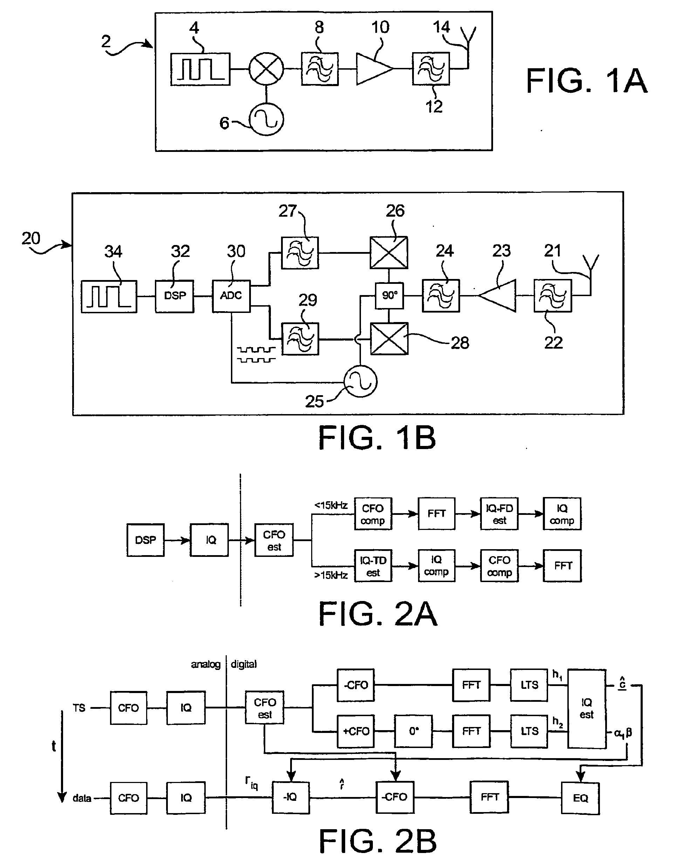

La figure 1A représente un émetteur 2, comportant des moyens 4 générateurs de signaux, des moyens 6 de transposition de fréquence, des moyens 8, 12 de filtrage, des moyens 10 amplificateurs, et une antenne 14.

La figure 1B représente un récepteur 20, comportant une antenne 21, des moyens 22, 24 de filtrage, des moyens amplificateurs 23. La référence 25 désigne un oscillateur local, les références 26 et 28 des mélangeurs, suivis respectivement de filtres 27, 29, l'ensemble des moyens 25 - 29 formant des moyens de transposition de fréquence. Un signal analogique traité par ces moyens est ensuite numérisé par des moyens 30 de numérisation, des moyens 32 de traitement numérique, pour produire un signal 34.

De nombreux systèmes de communication sans fils véhiculent ou vont véhiculer des informations sur plusieurs sous-porteuses orthogonales.

C'est le cas des systèmes dits OFDM et MC-CDMA qui offrent une bonne robustesse aux canaux de propagation multi-trajets et aux évanouissements sélectifs.

Les récepteurs qui utilisent ce multiplexage en fréquences orthogonales ne fonctionnent plus correctement lorsqu'il existe un décalage de fréquence ou d'horloge entre l'émetteur et le récepteur.

Ces systèmes sont aussi sensibles aux déséquilibres de gain et de phase entre les voies en phase et en quadrature de phase du récepteur. La superposition de ces dégradations génère des interférences inter porteuses et rend particulièrement difficile la démodulation.

Il est possible d'évaluer les dégradations subies par des séquences définies en fréquence (pilotes ou « séquences d'apprentissage ») à l'émission dans les systèmes multi porteuses.

On procède d'abord au calcul de l'effet de l'offset de fréquence et d'horloge en sortie de FFT.

Soit $[X_{-K},..,X_{-1},X_1,..,X_K]$ le signal codé à transmettre sur les 2K sous-porteuses OFDM.

A l'émission le signal temporel $x_n$ en sortie de IFFT s'écrit :

$$x_n = \frac{1}{2K} \sum_{k=-K}^{K} X_k e^{j*2\pi * \frac{k*n}{2K}}$$

En sortie de canal gaussien et après transposition en bande de base, le signal affecté par l'offset, ou le décalage, de fréquence $\Delta f$ et d'horloge $\delta t$ devient :

$$y_n = \frac{1}{2K} \sum_{k=-K}^{K} X_k H_k e^{j*2\pi(k+\Delta fT)\frac{(1+\frac{\delta}{T}t)n}{2K}} + w_n$$

où T est la période symbole, les coefficients $H_k$ étant représentatifs du canal de propagation, et $w_n$ désignant un bruit additif.

Après passage dans la FFT, on obtient :

$$Y_p = \frac{1}{2K} \sum_{n=-K}^{K} \sum_{k=-K}^{K} X_k H_k e^{j*2\pi \frac{(k+\Delta fT)(1+\frac{\delta}{T})-p}{2K}n} + W_p$$

Wp désignant un bruit additif.

On peut procéder aux hypothèses simplificatrices suivantes: $\Delta f.\delta t << \delta t$

En permutant les sommes on obtient :

$$Y_p = X_p H_p \frac{\sin(\pi(\Delta fT + p\frac{\delta t}{T}))}{2K\sin(\frac{\pi(\Delta fT + p\frac{\delta t}{T})}{2K})} e^{j*2\pi*\frac{2K-1}{2K}(\Delta fT + p\frac{\delta t}{T})}$$

$$+ \sum_{\substack{k=-K\\k\neq p}}^{K} X_k H_k \frac{\sin(\pi(k - p + \Delta fT + k\frac{\delta t}{T}))}{2K\sin(\frac{\pi(k - p + \Delta fT + k\frac{\delta t}{T})}{2K})} e^{j*2\pi*\frac{2K-1}{2K}(k-p+\Delta fT+k\frac{\delta t}{T})} + W_p$$

Le signal, ainsi affecté par un offset de fréquence et d'horloge, voit sa phase tourner, son gain se dégrader et des interférences inter porteuses apparaître.

En présence de déséquilibres IQ, les interférences inter porteuses sont accentuées. On modélise la composition de ces imperfections par un bloc de décalages de fréquence et d'horloge suivi d'un bloc de déséquilibres IQ. En sortie de FFT, l'expression devient :

$$Y_p = \left( \alpha.X_p H_p e^{j*2\pi*\frac{2K-1}{2K}(\Delta fT + p\frac{\delta t}{T})} + \beta.X^{*m}_p H^{*m}_p e^{-j*2\pi*\frac{2K-1}{2K}(\Delta fT + p\frac{\delta t}{T})} \right) \frac{\sin(\pi(\Delta fT + p\frac{\delta t}{T}))}{2K\sin(\frac{\pi(\Delta fT + p\frac{\delta t}{T})}{2K})}$$

$$+ \alpha \sum_{\substack{k=-K\\k\neq p}}^{K} X_k H_k \frac{\sin(\pi(k - p + \Delta fT + \frac{\delta t}{T}))}{2K\sin(\pi\frac{k - p + \Delta fT + \frac{\delta t}{T}}{2K})} e^{j*2\pi*\frac{2K-1}{2K}(k-p+\Delta fT+\frac{\delta t}{T})}$$

$$+ \beta \sum_{\substack{k=-K\\k\neq p}}^{K} X^{*m}_k H^{*m}_k \frac{\sin(\pi(k - p + \Delta fT + \frac{\delta t}{T}))}{2K\sin(\pi\frac{k - p + \Delta fT + \frac{\delta t}{T}}{2K})} e^{-j*2\pi*\frac{2K-1}{2K}(k-p+\Delta fT+\frac{\delta t}{T})} + W_{2p}$$

où *m désigne la sous-porteuse miroir conjuguée, et où $\alpha$ et $\beta$ sont les paramètres des déséquilibres IQ.

Lorsque de telles dégradations se superposent, les algorithmes d'estimation de canal et d'égalisation sont biaisés, et les systèmes d'estimation et de compensation des déséquilibres IQ sont dégradés.

Les figures 2A et 2B représentent des schémas de dispositifs de compensation tels que décrits dans le document WO03/101064.

Dans ce document, une correction des déséquilibres IQ et une correction d'un décalage de fréquence sont réalisés conjointement à partir de pilotes OFDM continus en fréquence. Le principe de la correction des déséquilibres IQ repose sur un « lissage » en fréquence de l'estimation de canal.

En fonction du décalage de fréquence estimé, l'évaluation des déséquilibres IQ est effectuée par un algorithme dans le domaine fréquentiel (IQ-FD) ou temporel (IQ-TD) et compensé à posteriori, comme illustré respectivement sur les figures 3 et 5 de ce document.

Ce basculement d'un algorithme à l'autre permet de diminuer la complexité des calculs en s'affranchissant des termes d'interférence entre sous porteuses.

L'implantation de ces deux algorithmes et leur commutation est cependant complexe à mettre en oeuvre. Pour un système hardware, deux circuits sont nécessaires, ce qui gaspille de la place sur une puce. Pour un système software, deux programmes sont nécessaires, ce qui gaspille de la mémoire.

Par ailleurs, la compensation des données nécessite d'avoir les estimées de l'offset de fréquence et des déséquilibres IQ, après traitement des séquences d'apprentissage (dont FFT). Il peut donc apparaître des temps de latence pendant lesquels les données attendent ces estimations.

De plus l'estimation de canal a besoin d'être corrigée en fonction de ces estimations, ce qui augmente la complexité.

On peut enfin reprocher à cet algorithme son manque de souplesse : il est nécessaire d'avoir deux séquences d'apprentissage successives pour effectuer l'estimation de l'offset de fréquence, et des déséquilibres IQ dans le cas d'un offset de fréquence fort (algorithme IQ-TD). Ces séquences d'apprentissage longues, consécutives ne sont pas toujours disponibles dans les standards actuels de télécommunication.

Il se pose donc le problème de trouver un procédé de mesure ou d'estimation des déséquilibres IQ, en présence d'un décalage de fréquence entre émetteur et récepteur, ne présentant pas les limitations de l'art antérieur exposées ci-dessus.

## EXPOSÉ DE L'INVENTION

La présente invention permet de remédier à ces inconvénients.

L'invention concerne un procédé de correction de l'estimation de déséquilibre IQ d'un récepteur, dite estimation précédente, pour obtenir un déséquilibre IQ corrigé, dans lequel la correction est effectuée en fonction des variations résiduelles de déséquilibre depuis ladite estimation précédente.

Selon l'invention, on réalise :

- une estimation de la correction de l'estimation du déséquilibre IQ, en fonction des variations résiduelles de déséquilibre,
- une correction des décalages de fréquence et/ou d'horloge, et du déséquilibre IQ, en fonction de l'estimation du déséquilibre, pour obtenir un déséquilibre IQ corrigé ou une estimation corrigée du déséquilibre IQ.

Le procédé selon l'invention ne requiert aucune mise en mémoire de signaux et ne génère pas de temps de latence.

L'estimation des déséquilibres IQ est menée selon un algorithme adaptatif, à partir d'un nouveau critère peu sensible aux décalages de fréquence.

Ceci offre une bonne robustesse et une souplesse d'utilisation. Un seul algorithme est nécessaire, quel que soit le domaine de fréquence. Il fonctionne en outre à partir de pilotes ou de séquences d'apprentissages non nécessairement consécutifs.

Enfin, l'estimation de canal n'a rapidement plus besoin d'être corrigée : la correction intervient en amont de l'opération de transformation de Fourier rapide, ou lors de cette opération, mais pas directement sur l'opération d'estimation de canal.

Au contraire les procédés décrits dans le document WO03/101064 d'une part tirent l'estimation des paramètres de déséquilibre de l'estimation de canal, et d'autre part nécessitent en outre une correction de l'estimation de canal.

La compensation des déséquilibres IQ peut être effectuée à partir de pilotes continus en fréquence, non nécessairement consécutifs.

L'estimation du déséquilibre IQ peut s'effectuer à partir de pilotes, ou séquences d'apprentissage, engendrant des transitions dues aux déséquilibres IQ opposées.

Ainsi, avec de tels pilotes, étant donné que les interférences générées par un déséquilibre IQ peuvent s'ajouter ou se retrancher au signal complexe reçu selon le signe du rapport entre le symbole OFDM transmis et sa partie miroir, les transitions dues aux déséquilibres IQ étant opposées, la correction des déséquilibres IQ est améliorée.

L'estimation du déséquilibre IQ peut s'effectuer à partir de deux pilotes, ou séquences d'apprentissage.

L'estimation du déséquilibre IQ peut s'effectuer par exemple à partir de deux pilotes ou séquences d'apprentissage $p_1$ et $p_2$, $p_1$ étant constitué par exemple d'une séquence pseudo aléatoire et $p_2$ étant par exemple identique à $p_1$ sur la première moitié de ses échantillons et opposée à $p_1$ sur la deuxième moitié de ses échantillons.

Avec ces deux pilotes, on obtient des transitions dues aux déséquilibres IQ qui sont opposées.

Les variations résiduelles de déséquilibre peuvent être calculées en fonction d'un signal d'interférence de porteuses et de sous-porteuses miroirs, par exemple selon un critère de minimisation de l'enveloppe du signal d'interférence.

Un paramètre $|E|^2$, caractéristique de l'enveloppe dudit signal d'interférence, peut à cette fin être utilisé.

De préférence, seules les transitions du signal d'interférence sont prises en compte.

Selon un mode de réalisation :

- on mesure la valeur des échantillons complexes fréquentiels de pilotes reçus au voisinage des transitions,
- on compare ces échantillons aux échantillons du pilote émis et on en extrait le paramètre $|E|^2$ caractéristique de l'enveloppe des interférences des déséquilibres IQ.

Le paramètre $|E|^2$ peut être par exemple égal ou proportionnel à :

$$\left|E(n)\right|^2 = \left|\frac{(S_5(n)p(n+1) - S_5(n+1)p(n))p_m(n)}{(p(n+1)p_m(n) - p(n)p_m(n+1))S_5(n)^{m\bullet}}\right|^2$$

ou encore à :

$$\left|E(n)\right|^2 = \left|\frac{(S_5(n)p(n+1) - S_5(n+1)p(n))p_m(n) - (S_5(n+1)p(n+2) - S_5(n+2)p(n+1))p_m(n+1)}{S_5(n)^{m\bullet}(p(n+1)p_m(n) - p(n)p_m(n+1)) - S_{5\,m}(n+1)^{\bullet}(p(n+2)p_m(n+1) - p(n+1)p_m(n+2))}\right|^2$$

où $S_5(n)$ est le signal reçu sur la sous-porteuse « n », $S_{5m}(n)$ le signal reçu sur la sous-porteuse miroir, $p(n)$ la valeur du pilote sur la sous-porteuse « n » et $p_m(n)$ le pilote sur la sous-porteuse miroir.

L'estimation βest des déséquilibre IQ peut être corrigée, par rapport à l'estimation précédente, proportionnel-lement à $\dfrac{\partial |E|^2}{\partial \beta'}$ , où β' représente le déséquilibre IQ résiduel.

L'invention concerne également un procédé de correction du déséquilibre IQ d'un récepteur, en présence d'un décalage de fréquence et/ou d'horloge, pour obtenir une estimation corrigée du déséquilibre IQ. Selon l'invention, on réalise :

- une estimation du déséquilibre IQ effectuée à partir de pilotes, ou séquences d'apprentissage, engendrant des transitions dues aux déséquilibres IQ qui sont opposées,
- une correction des décalages de fréquence et/ou d'horloge et du déséquilibre IQ en fonction de l'estimation du déséquilibre, pour obtenir une estimation corrigée du déséquilibre IQ.

Les pilotes utilisés dans ce procédé permettent d'obtenir des transitions dues aux déséquilibres IQ qui soient opposées.

L'estimation des déséquilibres IQ est menée selon un algorithme ici non nécessairement adaptatif, grâce au transitions opposées obtenues, la compensation du déséquilibre IQ et d'un décalage de fréquence pouvant alors s'effectuer directement, sans utilisation de variations résiduelles de déséquilibre.

L'estimation du déséquilibre IQ peut s'effectuer à partir de deux pilotes ou séquences d'apprentissage.

L'estimation du déséquilibre IQ peut par exemple s'effectuée à partir de deux pilotes ou séquences d'appren-tissage $p_1$ et $p_2$, $p_1$ étant constitué d'une séquence pseudo aléatoire et $p_2$ étant identique à $p_1$ sur la première moitié de ses échantillons et opposé à $p_1$ sur la deuxième moitié de ses échantillons.

L'invention concerne également un procédé de correction d'un signal s2 reçu et numérisé par un récepteur sans fil, comportant une correction du déséquilibre IQ tel qu'exposé ci-dessus, et une correction du signal S2 en fonction de ce déséquilibre.

La correction du signal s2 est de préférence réalisée avant une opération de transformation de Fourier.

Les variations résiduelles de déséquilibre peuvent être obtenues à partir du signal (S4) obtenu par transformée de Fourier rapide (FFT) dans le récepteur.

Selon l'invention, une compensation des offsets, ou décalages, de fréquence et d'horloge ainsi que des déséquilibres IQ, peut être effectuée, par exemple à partir de pilotes continus en fréquence.

Selon l'invention, on peut donc adapter conjointement les estimées des décalages (« offsets ») de fréquence et d'horloge et les déséquilibres IQ (déséquilibres entre les composantes en phase (« in phase », ou I) et en quadrature de phase (« quadrature - phase », ou Q) du signal du récepteur).

Une première estimation des déséquilibres IQ peut être effectuée après une synchronisation grossière de fréquence, ou après une correction fine de décalage de fréquence.

Ce procédé peut en outre comporter une étape d'estimation de canal et de correction de cette estimation en fonction des décalages de fréquence, d'horloge et des déséquilibres IQ.

La correction des décalages de fréquence et d'horloge peut être effectuée à partir du signal obtenu par transformée de Fourier rapide dans le récepteur, ou bien à partir d'une estimation de canal.

La correction des décalages de fréquence et d'horloge peut être effectuée à partir de deux pilotes ou séquences d'apprentissage $p_1$ et $p_2$ consécutifs en temps ou entrecoupés de symboles de données.

Une étape d'estimation de canal peut être prévue, qui peut être corrigée en fonction du déséquilibre IQ et éventuellement en fonction de décalages d'horloge et/ou de fréquences.

L'invention concerne également un procédé de correction, dans un récepteur sans fil, d'un signal s1 reçu, ce signal comportant une erreur due à un décalage de fréquence et/ou d'horloge ainsi qu'un déséquilibre de gain et/ou de phase, procédé dans lequel :

- on numérise le signal s1 reçu,
- on corrige le déséquilibre de gain et/ou de phase du signal numérisé, avant transformation de Fourier rapide du signal.

Une étape de correction de l'erreur due à un décalage de fréquence et/ou d'horloge, avant numérisation du signal reçu, ou après numérisation et avant transformation de Fourier rapide du signal, peut être prévue.

Selon une variante, une étape de correction de l'erreur due à un décalage d'horloge est réalisée après transformation de Fourier rapide du signal.

L'invention concerne également un dispositif récepteur comportant des moyens de correction d'un déséquilibre IQ, comportant :

- des moyens d'estimation de correction du déséquilibre IQ, en fonction des variations résiduelles de déséquilibre depuis une estimation précédente du déséquilibre IQ,
- des moyens de correction du déséquilibre IQ en fonction de cette estimation, pour obtenir une estimation corrigée du déséquilibre IQ,
- des moyens de correction de décalages de fréquence et d'horloge.

L'estimation du déséquilibre IQ peut s'effectuer à partir de pilotes, ou séquences d'apprentissage, engendrant des transitions dues aux déséquilibres IQ opposées.

L'estimation du déséquilibre IQ peut s'effectuée à partir de deux pilotes, ou séquences d'apprentissage.

L'estimation du déséquilibre IQ peut par exemple s'effectuer à partir de deux pilotes ou séquences d'apprentissage $p_1$ et $p_2$, $p_1$ étant constitué par exemple d'une séquence pseudo aléatoire et $p_2$ étant par exemple identique à $p_1$ sur la première moitié de ses échantillons et opposé à $p_1$ sur la deuxième moitié de ses échantillons. Avec ces deux pilotes, on obtient des transitions dues aux déséquilibres IQ qui sont opposée.

Un tel dispositif peut en outre comporter des moyens pour calculer les variations résiduelles de déséquilibre en fonction d'un signal d'interférence de porteuses et de sous sous-porteuses miroirs, par exemple selon un critère de minimisation de l'enveloppe du signal d'interférence.

Les variations résiduelles de déséquilibre peuvent être calculées en fonction d'un paramètre $|E|^2$ caractéristique de l'enveloppe dudit signal d'interférence.

De préférence, seules les transitions du signal d'interférence sont prises en compte.

Un dispositif selon l'invention peut en outre comporter :

- des moyens de mesure de la valeur des échantillons complexes fréquentiels de pilote au voisinage des transitions,
- des moyens de comparaison de ces échantillons aux échantillons du pilote émis et de calcul du paramètre $|E|^2$ caractéristique de l'enveloppe des interférences des déséquilibres IQ.

Des moyens peuvent en outre corriger l'estimation βest des déséquilibre IQ, par rapport à l'estimation précédente, proportionnellement à $\dfrac{\partial |E|^2}{\partial \beta'}$ , où β' représente le déséquilibre IQ résiduel.

L'invention concerne également un dispositif récepteur comportant des moyens de correction d'un déséquilibre IQ, comportant :

- des moyens d'estimation de correction du déséquilibre IQ, à partir de pilotes ou séquences d'apprentissage engendrant des transitions dues aux déséquilibres IQ opposées,
- des moyens de correction du déséquilibre IQ en fonction de cette estimation, pour obtenir une estimation corrigée du déséquilibre IQ,
- des moyens de correction de décalages de fréquence et d'horloge.

L'estimation du déséquilibre IQ peut s'effectuer à partir de deux pilotes, ou séquences d'apprentissage.

L'estimation du déséquilibre IQ peut s'effectuer à partir de deux pilotes ou séquences d'apprentissage $p_1$ et $p_2$, $p_1$ étant constitué par exemple d'une séquence pseudo aléatoire et $p_2$ étant par exemple identique à $p_1$ sur la première moitié de ses échantillons et opposé à $p_1$ sur la deuxième moitié de ses échantillons.

Un dispositif récepteur selon l'invention peut en outre comporter des moyens de correction d'un signal s2, reçu et numérisé par un récepteur sans fil, en fonction du déséquilibre IQ.

La correction du signal s2 peut être réalisée avant une opération de transformation de Fourier.

Les variations résiduelles de déséquilibre peuvent être obtenues à partir du signal obtenu par transformée de Fourier rapide (FFT) dans le récepteur.

Dans un dispositif selon l'invention, des moyens peuvent avantageusement permettre de réaliser une première estimation des déséquilibres IQ soit après une synchronisation grossière, soit après une correction fine, de fréquence.

Des moyens d'estimation de canal et de correction de cette estimation en fonction des décalages de fréquence, d'horloge et des déséquilibres IQ, peuvent également être prévus.

Des moyens de correction des décalages de fréquence et d'horloge peuvent effectuer cette correction à partir du signal obtenu par transformée de Fourier rapide (FFT) dans le récepteur ou à partir d'une estimation de canal.

Des moyens de correction des décalages de fréquence et d'horloge peuvent effectuer cette correction à partir de deux pilotes ou séquences d'apprentissage $p_1$ et $p_2$ consécutifs en temps ou entrecoupés de symboles de données.

Des moyens d'estimation de canal peuvent en outre être prévus, l'estimation de canal étant corrigée en fonction du déséquilibre IQ et/ou en fonction de décalages d'horloge et/ou de fréquences.

L'invention concerne également un programme informatique comportant les instructions pour mettre en oeuvre un procédé selon l'invention.

L'invention concerne également un support de données, pouvant être lu par un système informatique, comportant des données sous forme codée, pour mettre en oeuvre un procédé selon l'invention.

L'invention concerne également un produit logiciel comportant un support de données susceptible d'être lu par un système informatique, permettant de mettre en oeuvre un procédé selon l'invention.

## BRÈVE DESCRIPTION DES DESSINS

- Les figures 1A et 1B représentent le schéma d'une transmission radio numérique selon l'art antérieur,
- les figures 2A et 2B représentent des procédés de correction selon l'art antérieur,
- la figure 3 représente un premier mode de réalisation d'un procédé et d'un dispositif selon l'invention,
- la figure 4 représente un deuxième mode de réalisation d'un procédé et d'un dispositif selon l'invention,
- les figures 5A à 5C illustrent l'effet des interférences de sous-porteuses miroirs dues aux déséquilibres IQ,
- les figures 6A et 6B représentent une suite d'étapes de procédés selon l'invention,
- les figures 7A - 7C sont des résultats de simulations comparatives, entre des procédés mettant en oeuvre un algorithme selon l'invention et selon l'art antérieur,
- la figure 7D représente les résultat d'une simulation d'un procédé selon l'invention.
- les figures 8 et 9 représentent des structures d'un système de diffusion de messages sur dispositifs de téléphonie mobile et un schéma de composants d'un dispositif de téléphonie mobile.

## EXPOSÉ DÉTAILLÉ DE MODES DE RÉALISATION PARTICULIERS

Selon l'invention, on cherche à corriger des décalages résiduels dans un signal.

Une synchronisation de symbole et de trame peut avoir été effectuée préalablement pour un tel signal, ainsi qu'une synchronisation grossière de fréquence.

Le décalage de fréquence résiduel considéré est par exemple inférieur à un demi écart de fréquence entre sous porteuses.

Les signaux considérés sont complexes et échantillonnés dans le domaine temporel (ces signaux sont désignés dans la suite par des variables en minuscule) ou fréquentiel (ces signaux sont désignés dans la suite par des variables en majuscule).

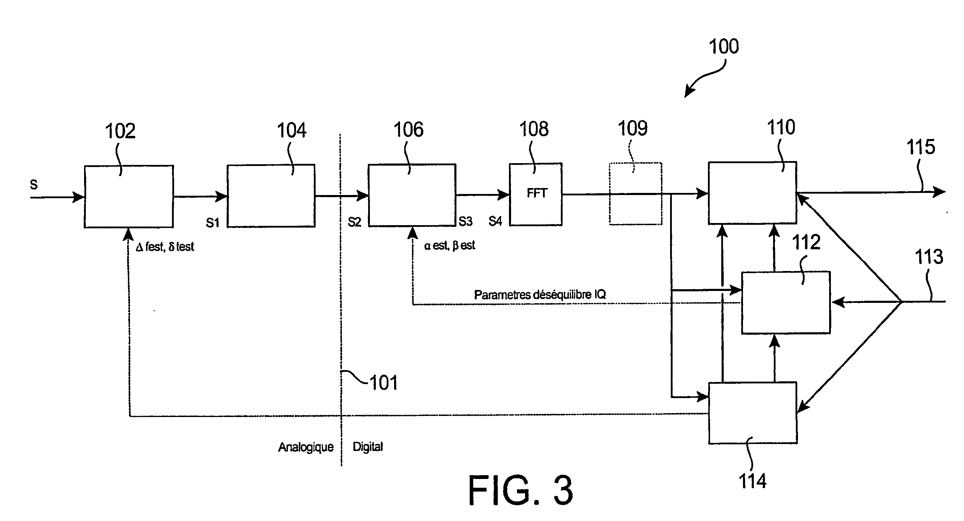

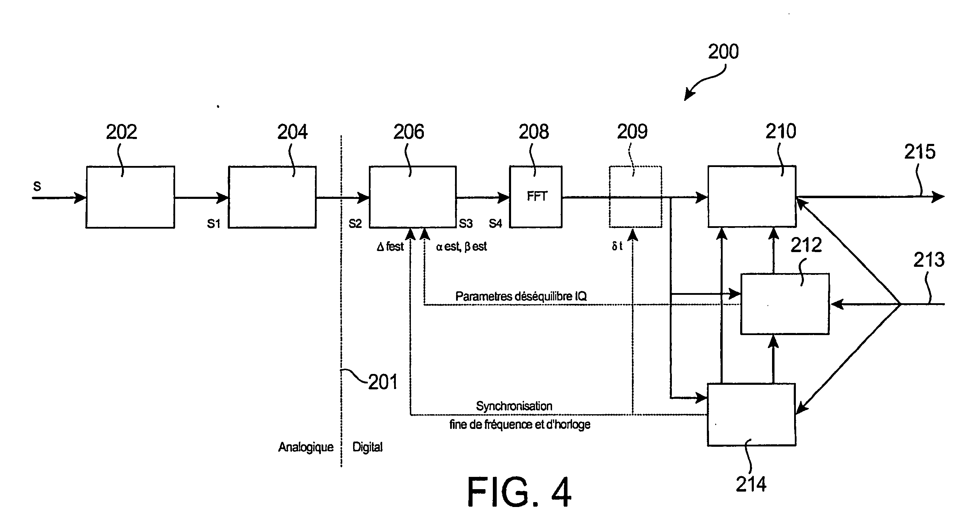

Ces signaux apparaissent en entrée et sortie des différents blocs des chaînes de réception décrites dans les figures 3 et 4 qui concernent chacune un mode de réalisation de l'invention.

Chacun des blocs décrits dans les figures 3 et 4 va être décrit ci-dessous.

Sur ces deux figures, les deux domaines analogique et numérique sont séparés symboliquement par une ligne 101, 201 de trais interrompus.

Un signal d'entrée s se voit affecté, tant en fréquence qu'en déséquilibre IQ, ce qui est représenté symboliquement sur les figures 3 et 4 par les moyens 102, 104, 202, 204.

Le signal entrant dans la partie numérique est, après numérisation (par des moyens non représentés sur les figures) appliqué à des moyens 106 de compensation du déséquilibre IQ (figure 3) ou des moyens 206 de compensation, à la fois des déséquilibres IQ et des décalages en fréquence (figure 4).

En figure 3, les décalages en fréquence sont compensés en amont, dans la partie analogique, tandis que les deux corrections se font dans la partie numérique en figure 4.

Dans les deux cas, le signal s3 produit par les moyens 106, 206 est soumis à un traitement par transformée de Fourier rapide (FFT) par les moyens 108, 208.

Le signal S4 ainsi produit peut être envoyé à des moyens 110, 210 d'estimation de canal.

Des moyens 112, 212 permettent, à partir du signal S4, de réaliser une estimation des déséquilibres IQ, cette estimation permettant aux moyens 106, 206 de corriger le signal s2 après numérisation, mais avant traitement par FFT.

Des moyens 114, 214 permettent, à partir du signal S4, de réaliser une estimation des décalages en fréquence et d'horloge, cette estimation permettant aux moyens 206 (figure 4) de corriger le signal s2 après numérisation, mais avant traitement par FFT, ou aux moyens 102 (figure 3) de corriger le signal entrant, avant numérisation.

Cette estimation permet également d'affiner l'estimation des déséquilibres IQ par les moyens 112, 212, ainsi que, éventuellement, l'estimation de canal.

Dans le mode de réalisation de la figure 4, un décalage d'horloge peut aussi être corrigé après FFT par des moyens 209 de compensation de décalages d'horloge. En effet les décalages d'horloge ne se laissent pas facilement compenser avant FFT. De tels moyens 109 de compensation de décalages d'horloges peuvent d'ailleurs être également prévus dans le schéma de la figure 3, en sortie de FFT, comme représenté sur cette figure en traits interrompus.

Des signaux pilotes 113, 213 sont envoyés régulièrement, ces signaux permettant aux moyens 112, 212, 114, 214 de calculer les estimations des déséquilibres IQ et de décalages en fréquence et d'horloge. Ces signaux pilotes sont à des fréquences connues.

Les moyens d'estimation 112, 114, 212, 214 effectuent les estimations de correction à partir des signaux numériques issus de la FFT, ou éventuellement des signaux provenant des moyens 209 ou 109, mais aussi des séquences pilotes 113, 213.

Les signaux de correction produits par ces moyens d'estimation permettent éventuellement de corriger l'estimation de canal des moyens 110, 210 d'estimation de canal.

Mais le signal produit par ces moyens 110, 210 est en fait peu dégradé par rapport au signal entrant dans ces moyens, qui est déjà un signal corrigé.

Un signal 115, 215 de sortie, et éventuellement un signal d'estimation de canal sont produits par le système.

Comme on le comprend des schémas 3 et 4, les moyens 110, 210 d'estimation de canal n'interviennent pas dans les calculs d'estimation d'erreurs.

Un décalage $\Delta f$ de fréquence entre émetteur et récepteur créé un déphasage qui s'exprime en fonction de la période d'échantillonnage $T_e$ :

$$s_1(k) = s(k).e^{j \cdot 2\pi \cdot \Delta f \cdot k \cdot T_e}$$

Le désaccord IQ est quant à lui caractérisé par les deux paramètres de déséquilibre de gain $\varepsilon$ et de phase $\Delta\Phi$ :

$$\mathrm{Re}\{s_2\} = (1+\varepsilon)\cos\Delta\Phi\,\mathrm{Re}\{s_1\} - (1+\varepsilon)\sin\Delta\Phi\,\mathrm{Im}\{s_1\}$$

$$\mathrm{Im}\{s_2\} = (1-\varepsilon)\cos\Delta\Phi\,\mathrm{Im}\{s_1\} - (1-\varepsilon)\sin\Delta\Phi\,\mathrm{Re}\{s_1\}$$

Alors

$$s_2 = \alpha.s_1 + \beta.s_1^{\bullet}$$

Avec :

$$\alpha = \cos \Delta\Phi - j\varepsilon \sin \Delta\Phi$$

$$\beta = \varepsilon \cos \Delta\Phi - j \sin \Delta\Phi$$

s2 est le signal entrant dans la partie numérique du dispositif (voir figure 3 et 4).

Il peut être caractérisé de façon équivalente en OFDM par les interférences de la sous-porteuse miroir. Après Transformée de Fourier :

$$S_2 = \alpha.S_1 + \beta.S_1^{m\bullet} \ .$$

D'une manière générale, $S^m$ désigne le signal miroir d'un signal S quelconque. $S^m$ est le signal dont on aurait permuté sous porteuses « n » et sous porteuses « N-n », où N est le nombre de sous porteuses. S* est le signal conjugué de S.

Comme illustré sur les figures 3 et 4, la compensation des déséquilibres IQ peut s'effectuer tout de suite après la conversion analogique-numérique grâce aux estimées des paramètres IQ provenant de moyens 112, 212 d'estimation de désaccord IQ:

$$s_3(k) = \frac{\alpha_{est}^{\bullet} s_2(k) - \beta_{est} s_2^{\bullet}(k)}{|\alpha_{est}|^2 - |\beta_{est}|^2}$$

où $s_2$ est le signal dégradé et $s_3$ le signal corrigé en fonction des estimées $\alpha_{est}$ et $\beta_{est}$ des paramètres $\alpha$ et $\beta$ des déséquilibres IQ.

Le signal corrigé des déséquilibres IQ s'écrit alors :

$$s_3(k) = \frac{(\alpha_{est}^{\bullet}\alpha - \beta_{est}\beta^{*}).s_1(k) - (\beta_{est}\alpha^{*} - \alpha_{est}^{\bullet}\beta).s_1(k)^{\bullet}}{|\alpha_{est}|^2 - |\beta_{est}|^2}$$

Si on appelle $\alpha'$ et $\beta'$ les décalages résiduels, qui traduisent l'écart entre les valeurs réelles de $\alpha$ et $\beta$ et leur valeur estimée :

$$\alpha' = \frac{\alpha_{est}^{\bullet}\alpha - \beta_{est}\beta^{\bullet}}{|\alpha_{est}|^2 - |\beta_{est}|^2}$$

$$\beta' = \frac{\beta_{est}\alpha^{\bullet} - \alpha_{est}^{\bullet}\beta}{|\alpha_{est}|^2 - |\beta_{est}|^2}$$

alors, on a :

$$s_3(k) = \alpha' s_1(k) + \beta' s_1(k)^{\bullet}$$

Les algorithmes d'adaptation permettent de minimiser β' et de rendre α' unitaire.

Ces deux paramètres étant liés (puisque α et β sont eux-mêmes liés), on peut agir sur l'un ou l'autre, ou sur une combinaison des deux, afin de compenser les déséquilibres IQ.

Pour simplifier les calculs, il est préférable de chercher à minimiser β'.

Comme déjà indiqué ci-dessus, la compensation des décalages de fréquence et d'horloge s'effectue soit en envoyant un signal de contrôle aux moyens 102 synthétiseur de fréquence (comme illustré sur la figure 3), soit en corrigeant le décalage de fréquence avant Transformée de Fourier Rapide, et le décalage d'horloge après Transformée de Fourier Rapide (comme illustré sur la figure 4), soit dans un système bouclé de type Digital PLL.

Il est aussi possible de compenser grossièrement ces décalages en fréquence et d'horloge en analogique et de corriger les décalages résiduels en numérique. La correction numérique du décalage de fréquence consiste en une rotation de phase :

$$s_4(k) = s_3(k).e^{-j*2\pi*\Delta f_{est}*k*T_e}$$

où $s_3$ est le signal dégradé et $s_4$ le signal corrigé en fonction de l'estimée $\Delta f_{est}$ de l'offset de fréquence et Te est la période d'échantillonnage. Dans l'architecture de la figure 3, la correction du décalage de fréquence est analogique ($s_4 = s_3$).

La correction numérique du décalage d'horloge consiste en une rotation de phase après FFT :

$$S_5(p) = S_4(p).e^{-j*2\pi*p*\frac{\delta t_{est}}{T_e}}$$

où $S_4$ est le signal dégradé et $S_5$ le signal corrigé en fonction de l'estimée $\delta t_{est}$ de l'offset d'horloge.

Des étapes de calcul et de mise à jour des estimées des déséquilibres IQ vont maintenant être exposées.

L'estimation des paramètres des déséquilibres IQ s'effectue en estimant une variation résiduelle du déséquilibre par rapport à une estimation précédente ou à l'estimation précédente.

Cette estimation peut être réalisé grâce aux pilotes P(n) continus en fréquence (séquence dont tous les échantillons fréquentiels sont connus), par minimisation de l'enveloppe du signal parasite.

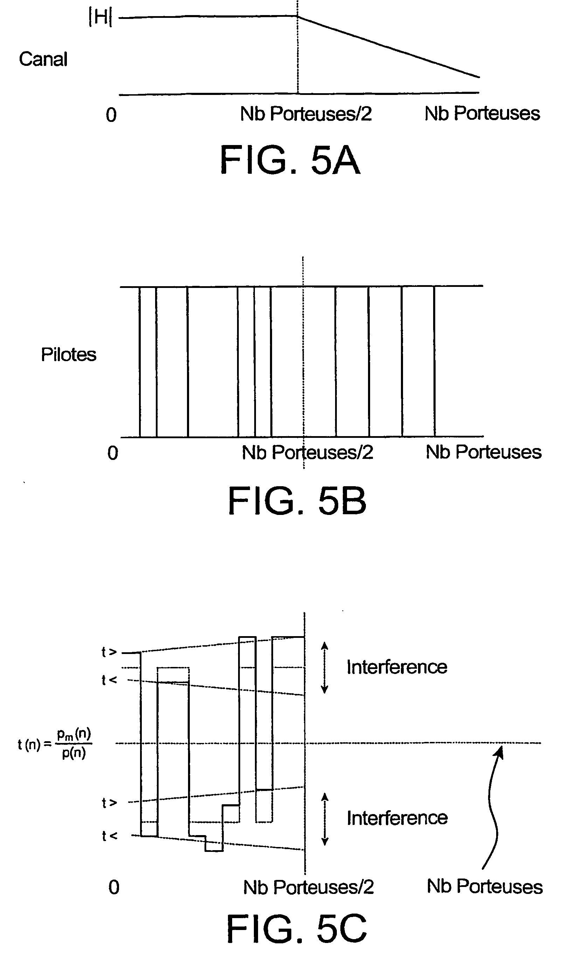

Après Transformée de Fourier, les déséquilibres IQ correspondent en effet à un signal d'interférence des sous-porteuses miroir, comme expliqué ci-dessous en liaison avec les figures 5A-5C.

La figure 5A représente, à titre d'exemple, le module du canal de propagation, constant pour les pilotes des sous porteuses et décroissant pour les pilotes des sous- porteuses miroirs.

La figure 5B représente les pilotes p(n) (pilote à la sous porteuse n) et les pilotes miroirs. pm(n) est le pilote miroir à la sous porteuse N-n.

La figure 5C représente les interférences résultant de l'interférence des pilotes et des pilotes miroirs. C'est à ces interférences que correspondent les déséquilibres IQ. La courbe en traits continus de la figure 5C représente en fait le signal S5, en sortie de module de compensation de décalage d'horloge.

A chaque fois que le rapport entre pilote à la sous-porteuse « n » et pilote miroir à la sous-porteuse « N-n » change, le signal d'interférence S5 change de signe.

En observant ces « transitions », on peut extraire, dans le domaine fréquentiel, une estimée des déséquilibres IQ.

Soit p(n) la valeur du pilote sur la sous-porteuse « n » et pm(n) le pilote sur la sous-porteuse miroir « N - n », où N est le nombre de sous-porteuses.

Une transition est présente lorsque :

$$\frac{p_m(n+1)}{p(n+1)} \neq \frac{p_m(n)}{p(n)}$$

Afin d'estimer le paramètre β caractéristique des déséquilibres IQ :

- on mesure la valeur des échantillons complexes fréquentiels de pilote au voisinage des transitions,

- on compare ces échantillons aux échantillons du pilote émis et on en extrait un paramètre caractéristique de l'enveloppe des interférences des déséquilibres IQ,
- on pondère éventuellement ce paramètre, dans l'algorithme d'adaptation.

L'algorithme d'adaptation peut minimiser l'enveloppe des interférences des déséquilibres IQ en utilisant le critère quadratique suivant:

$$\left|E(n)\right|^2 = \left|\frac{(S_5(n)p(n+1)-S_5(n+1)p(n))p_m(n)}{(p(n+1)p_m(n)-p(n)p_m(n+1))S_5(n)^{m\bullet}}\right|^2$$

On peut réduire l'effet de la variation du canal en utilisant le critère :

$$\left|E(n)\right|^2 = \left|\frac{(S_5(n)p(n+1)-S_5(n+1)p(n))p_m(n)-(S_5(n+1)p(n+2)-S_5(n+2)p(n+1))p_m(n+1)}{S_5(n)^{m\bullet}(p(n+1)p_m(n)-p(n)p_m(n+1))-S_{5\,m}(n)^{\bullet}(p(n+2)p_m(n+1)-p(n+1)p_m(n+2))}\right|^2$$

où $S_5(n)$ est le signal reçu sur la sous-porteuse « n », $S_{5m}(n)$ le signal reçu sur la sous-porteuse miroir, $p(n)$ la valeur du pilote sur la sous-porteuse « n » et $p_m(n)$ le pilote sur la sous-porteuse miroir.

Par rapport aux critères connus du document WO03/101064, l'intérêt des critères selon l'invention, ou du critère de la minimisation des erreurs entre sous-porteuses consécutives, va maintenant être montré.

Comme on le comprend de ce document, l'estimation des paramètres des déséquilibres IQ peut s'effectuer à partir de l'estimation de canal par minimisation de l'erreur quadratique entre sous-porteuses consécutives. L'estimée au sens des moindres carrés donne :

$\beta_{est}'=A/B$, avec :

$$A=\left(\hat{H}_{p+1}\frac{2K\sin\left(\frac{\pi(\Delta fT+(p+1)\frac{\delta t}{T})}{2K}\right)}{\sin(\pi(\Delta fT+(p+1)\frac{\delta t}{T}))}e^{-j\bullet2\pi\bullet\frac{2K-1}{2K}(\Delta fT+(p+1)\frac{\delta t}{T})}-\hat{H}_p\frac{2K\sin\left(\frac{\pi(\Delta fT+p\frac{\delta t}{T})}{2K}\right)}{\sin(\pi\Delta fT+p\frac{\delta t}{T})}e^{-j\bullet2\pi\bullet\frac{2K-1}{2K}(\Delta fT+p\frac{\delta t}{T})}\right)$$

$$B=\left(t_{p+1}\hat{H}_{p+1}^{\bullet m}\frac{2K\sin\left(\frac{\pi(\Delta fT+(p+1)\frac{\delta t}{T})}{2K}\right)}{\sin(\pi.(\Delta fT+(p+1)\frac{\delta t}{T}))}e^{j\bullet2\pi\bullet\frac{2K-1}{2K}(\Delta fT+(p+1)\frac{\delta t}{T})}-t_p\hat{H}_p^{\bullet m}\frac{2K\sin\left(\frac{\pi(\Delta fT+p\frac{\delta t}{T})}{2K}\right)}{\sin(\pi(\Delta fT+p\frac{\delta t}{T}))}e^{j\bullet2\pi\bullet\frac{2K-1}{2K}(\Delta fT+p\frac{\delta t}{T})}\right)$$

(où $\hat{H}$ est la mesure ou l'estimation du canal sans interférences interporteuses (voir son expression détaillée plus loin), $\delta t$ est le décalage d'horloge, et T est la période d'échantillonnage.

On procède aux hypothèses simplificatrices suivantes :

$$\frac{2K\sin(\dfrac{\pi(\Delta fT+(p+1)\dfrac{\delta t}{T})}{2K})}{\sin(\pi(\Delta fT+(p+1)\dfrac{\delta t}{T}))} \approx \frac{2K\sin(\dfrac{\pi(\Delta fT+p\dfrac{\delta t}{T})}{2K})}{\sin(\pi(\Delta fT+p\dfrac{\delta t}{T}))}$$

Alors :

$$\beta_{est}' = \frac{\left(\hat{H}_{p+1}\, e^{-j*2\pi*\frac{2K-1}{2K}(\Delta fT+(p+1)\frac{\delta t}{T})} - \hat{H}_p\, e^{-j*2\pi*\frac{2K-1}{2K}(\Delta f(1+\delta t)+p\,\delta t)}\right)}{\left(t_{p+1}\hat{H}_{p+1}^{*m}\, e^{j*2\pi*\frac{2K-1}{2K}(\Delta fT+(p+1)\frac{\delta t}{T})} - t_p\,\hat{H}_p^{*m}\, e^{j*2\pi*\frac{2K-1}{2K}(\Delta f+p\,\delta t)}\right)^*}$$

$$= \frac{\left(\hat{H}_{p+1}\, e^{-j*2\pi*\frac{2K-1}{2K}\frac{\delta t}{T}} - \hat{H}_p\right)}{\left(t_{p+1}\hat{H}_{p+1}^{*m}\, e^{j*2\pi*\frac{2K-1}{2K}\frac{\delta t}{T}} - t_p\,\hat{H}_p^{*m}\right)^*}$$

L'estimation des déséquilibres IQ est donc sensible aux décalages d'horloge et de fréquence qui font tourner la phase d'une sous-porteuse à l'autre. Il peut y avoir une forte influence de ces décalages sur l'estimation des déséquilibres IQ, jusqu'à 100% de l'estimation. En pratique on peut prendre la moyenne quadratique de l'expression ci-dessus afin d'être plus robuste aux bruits, présents dans le canal et le récepteur :

$$\beta_{est}' = \frac{\sum_{p=-K}^{K}\left(\hat{H}_{p+1}\, e^{-j*2\pi*\frac{2K-1}{2K}\frac{\delta t}{T}} - \hat{H}_p\right)\left(t_{p+1}\hat{H}_{p+1}^{*m}\, e^{j*2\pi*\frac{2K-1}{2K}\frac{\delta t}{T}} - t_p\,\hat{H}_p^{*m}\right)^*}{\sum_{p=-K}^{K}\left|t_{p+1}\hat{H}_{p+1}^{*m}\, e^{j*2\pi*\frac{2K-1}{2K}\frac{\delta t}{T}} - t_p\,\hat{H}_p^{*m}\right|^2}$$

Si le canal a été précédemment corrigé des offsets de fréquence et d'horloge, les estimées s'écrivent plus simplement :

$$\beta_{est}' = \frac{\sum_{p=-K}^{K}\left(\hat{H}_{p+1} - \hat{H}_p\right)\left(t_{p+1}\hat{H}_{p+1}^{*m} - t_p\,\hat{H}_p^{*m}\right)^*}{\sum_{p=-K}^{K}\left|t_{p+1}\hat{H}_{p+1}^{*m} - t_p\,\hat{H}_p^{*m}\right|^2}$$

Selon l'invention, l'estimée est adaptée itérativement en utilisant β' qui tend vers 0 lorsque l'estimée se rapproche des valeurs des déséquilibres réels. L'adaptation peut s'effectuer par une méthode de type gradient (Least Mean Square ou Recursive Least Square).

$$\beta_{est}(n+1) = \beta_{est}(n) + \mu.\beta'.\alpha^* \approx \beta_{est}(n) + \mu.\beta'.\alpha_{est}(n)^*$$

où $\mu$ est un facteur de convergence.

Puis :

$$\alpha_{est}(n+1) = \sqrt{1 - \mathrm{Im}\{\beta_{est}(n+1)\}^2} - j\frac{\mathrm{Re}\{\beta_{est}(n+1)\}\mathrm{Im}\{\beta_{est}(n+1)\}}{\sqrt{1 - \mathrm{Im}\{\beta_{est}(n+1)\}^2}}$$

Le critère de la minimisation de l'enveloppe des interférences va être détaillé ci-dessous.

Soit $p(n)$ la valeur de la séquence pilote à la nième sous-porteuse et $p_m(n)$ la valeur miroir, $s(n)$ le signal correspondant à ce pilote après FFT et $s_m(n)$ la valeur miroir.

Pour deux échantillons consécutifs de même valeur, et de valeurs miroirs différentes, l'écart entre ces échantillons correspond à la largeur de l'enveloppe des déséquilibres IQ et à la variation du canal.

Soit :

$$E(n) = \frac{s(n)p(n+1) - s(n+1)p(n)}{s_m(n)^*} \frac{p_m(n)}{p(n+1)p_m(n) - p(n)p_m(n+1)} \quad (1)$$

E correspond à la demie enveloppe du signal parasite due aux déséquilibres IQ et à la variation de canal, le tout « normalisé » par le canal miroir. E correspond en fait au paramètre $\beta'$.

En effet, soit e(n) le signal qui serait reçu sur la sous porteuse « n » si il n'y avait pas de déséquilibre IQ.

$$s(n) = \alpha'e(n) + \beta'e_m(n)^*$$

On peut alors développer le critère (1) ci-dessus :

$$E(n) = \frac{\alpha'\left[p(n+1)e(n) - p(n)e(n+1)\right] + \beta'\left[p(n+1)e_m(n)^* - p(n)e_m(n+1)^*\right]}{(p(n+1)p_m(n) - p(n)p_m(n+1))\left[\alpha'e_m(n)^* - \beta'e(n)\right]}p_m(n)$$

Le premier terme $[p(n+1)e(n) - p(n)e(n+1)]$ correspond à la variation du canal d'une sous-porteuse à l'autre.

Deux échantillons pilotes successifs sont, au signe près, proches d'une porteuse à l'autre.

Donc : $e_m(n+1)^* \approx \dfrac{p_m(n+1)}{p_m(n)}e_m(n)^*$ .

Si le canal varie peu, et avec l'approximation ci-dessus, on en déduit :

$$E(n) \approx \frac{\beta'\left[p(n+1)e_m(n)^* - \dfrac{p(n)p_m(n+1)}{p_m(n)}e_m(n)^*\right]}{(p(n+1)p_m(n) - p(n)p_m(n+1))s_m(n)^*}p_m(n) = \beta'\frac{e_m(n)^*}{s_m(n)^*} \approx \beta'$$

Si le canal varie de façon quasi-linéaire entre trois échantillons successifs (hypothèse raisonnable), la deuxième expression :

$$E(n) =$$

$$\frac{(s(n)p(n+1) - s(n+1)p(n))p_m(n) - (s(n+1)p(n+2) - s(n+2)p(n+1))p_m(n+1)}{s_m(n)^*(p(n+1)p_m(n) - p(n)p_m(n+1)) - s_m(n+1)^*(p(n+2)p_m(n+1) - p(n+1)p_m(n+2))}$$

donne un terme de variation de canal $[(p(n + 1)e(n) - p(n)e(n+1)) - (p(n + 2)e(n + 1) - p(n + 1)e(n + 2))]$ plus faible que $[p(n+1)e(n) - p(n)e(n+1)]$ et négligeable dans l'estimation de β'.

Afin d'atténuer le biais dû à la variation de canal, on peut donc, à partir de l'expression E(n) ci-dessus, soustraire deux variations consécutives.

L'adaptation des estimées (en figures 3 et 4 : dans le bloc d'estimation 112, 212 des déséquilibres), peut s'effectuer par une méthode de type gradient (Least Mean Square ou Recursive Least Square) qui minimise itérativement le critère $|E|^2$ sur l'ensemble des sous-porteuses. L'algorithme s'écrit donc :

$$\beta_{est} = \beta_{est} + \mu \frac{\partial |E|^2}{\partial \beta'} \, ,$$

avec μ facteur de convergence, formule qui traduit le caractère adaptatif de l'algorithme. Autrement dit, une valeur précédente de βest est corrigée des variations résiduelles du déséquilibre IQ, ces variations résiduelles étant traduites par le terme $\dfrac{\partial |E|^2}{\partial \beta'}$.

αest et βest sont par ailleurs liés par :

$$\alpha_{est} = \sqrt{1 - \text{Im}\{\beta_{est}\}^2} - j \frac{\text{Re}\{\beta_{est}\} \text{Im}\{\beta_{est}\}}{\sqrt{1 - \text{Im}\{\beta_{est}\}^2}}$$

Le choix de μ dépendra de ce qui est souhaité en termes de précision et de vitesse de convergence. Si le facteur μ est choisi faible, la précision est bonne, mais la vitesse de convergence faible, et inversement si μ est plus important.

L'estimation itérative de βest peut être réalisée dès que des pilotes sont disponibles.

Les développements ci-dessus montrent que l'estimateur $|E|^2$ est directement lié à l'erreur β' sur le paramètre de déséquilibres β (estimateur non biaisé).

L'enveloppe des interférences peut aussi être pondérée par la variation du canal en utilisant le critère simplifié :

$$|E(n)|^2 = \left| \frac{(S_s(n)p(n+1) - S_s(n+1)p(n))}{(p(n+1)p_m(n) - p(n)p_m(n+1))} \right|^2$$

Par ailleurs, du fait de la sélection des points de transition, on réduit la sensibilité de ces expressions aux effets de la fréquence, et les estimées en sont d'autant meilleures.

En fait, un seul paramètre (β) suffit pour avoir l'information sur le gain et la phase.

En éliminant de l'estimation les sous-porteuses faibles (et donc de faible rapport signal sur bruit), on obtient un critère peu sensible aux interférences et aux bruits. Cette élimination peut être faite par mesure directe de la sous - porteuse reçue. Et en ne considérant que les « transitions » du signal d'interférence, on rend l'algorithme peu complexe en temps de calcul.

Un autre critère que l'on peut utiliser est la minimisation de l'erreur entre sous-porteuses consécutives dans l'estimation de canal, développée dans le document WO 03/101064 (IQ-FD), modifié afin d'être implanté dans une structure adaptative, comme expliqué ci-dessus dans la démonstration. Il est cependant plus sensible aux interférences interporteuses générées par les décalages de fréquence et d'horloge que le critère précédent.

L'estimation des décalages de fréquence et d'horloge peut aussi s'effectuer à partir de l'estimation de canal.

La mesure, ou l'estimation, du canal sans interférences inter porteuses s'écrit :

$$\hat{H}_p = \left( \alpha . H_p e^{j*2\pi* \frac{2K-1}{2K}(\Delta fT + p\frac{\delta t}{T})} + \beta . \frac{X^{*m}_p}{X_p} H^{*m}_p e^{-j*2\pi* \frac{2K-1}{2K}(\Delta fT + p\frac{\delta t}{T})} \right) \frac{\sin(\pi(\Delta fT + p\frac{\delta t}{T}t))}{2K \sin(\frac{\pi(\Delta fT + p\frac{\delta t}{T})}{2K})}$$

La différence entre deux mesures sur deux pilotes consécutifs en temps provient des offsets de fréquence et d'horloge. Si on effectue leur corrélation :

$$\hat{H}_{1,p} \hat{H}_{2,p}^{*} = \left( \begin{array}{l} |\alpha|^2 |H_p|^2 e^{-j*2\pi* \frac{2K-1}{2K}(\Delta fT + 2K\frac{\delta t}{T})} + |\beta|^2 . \left| \frac{X^{*m}_p}{X_p} \right|^2 \left| H^{*m}_p \right|^2 e^{j*2\pi* \frac{2K-1}{2K}(\Delta fT + 2K\frac{\delta t}{T})} + \\ \\ 2\operatorname{Re}\left\{ \alpha.\beta.H_p.H^{*m}_p \frac{X^{*m}_p}{X_p} \right\} \cos(2\pi \frac{2K-1}{2K}(\Delta fT + 2K\frac{\delta t}{T})) \end{array} \right)$$

$$x \frac{\sin(\pi(\Delta fT + p\frac{\delta t}{T}))}{2K \sin(\frac{\pi(\Delta fT + p\frac{\delta t}{T})}{2K})} \cdot \frac{\sin(\pi(2\Delta fT + (p+2K)\frac{\delta t}{T}))}{2K \sin(\frac{\pi(2\Delta fT + (p+2K)\frac{\delta t}{T})}{2K})}$$

En pratique, si pilotes et pilotes miroirs sont décorrélés, prendre la moyenne sur les sous-porteuses de cette expression permet de rendre négligeable, dans l'estimation des offsets, interférences inter porteuses et effets des déséquilibres IQ :

$$\frac{1}{2\pi} angle\left( E\left[ \hat{H}_{1,p} \hat{H}_{2,p}^{*} \right] \right) = \Delta fT + 2K\frac{\delta t}{T}$$

De même pour une estimation de canal entre deux sous-porteuses consécutives on a :

$$\frac{1}{2\pi} angle\left( E\left[ \hat{H}_p \hat{H}_{p+1}^{*} \right] \right) = \frac{\delta t}{T}$$

Une fois estimée l'offset d'horloge, on en déduit l'offset de fréquence.

Les calculs ci-dessus des décalages d'horloge et de fréquence peuvent s'effectuer indifféremment sur les signaux en sortie de FFT ou sur l'estimation de canal.

Cette estimation des décalages de fréquence et d'horloge peut se faire également à partir de deux pilotes ou séquences d'apprentissage $p_1$ et $p_2$ consécutifs en temps ou espacés de symboles de données. Dans ce cas, H est remplacé, dans les formules ci-dessus, par le rapport signal reçu/signal connu. On obtient alors :

$$\frac{\delta t}{T_e} = \frac{1}{2\pi} angle\left(E\left[S_s(p)S_s^*(p+1)\right]\right)$$

$$N\Delta f T_e = \frac{1}{2\pi} angle\left(E\left[S_{s,1}(p)p_1(p)^* p_2(p)S_{s,2}^*(p)\right]\right) - N\frac{\delta t}{T_e}$$

Si les séquences $p_1$ et $p_2$ sont identiques :

$$N\Delta f T_e = \frac{1}{2\pi} angle\left(E\left[S_{s,1}(p)S_{s,2}^*(p)\right]\right) - N\frac{\delta t}{T_e}$$

La poursuite de l'estimation du décalage de fréquence peut s'effectuer de cette manière entre deux pilotes espacés de « Ns » symboles de données. Il suffit pour cela que l'offset de fréquence normalisé soit inférieur à 0.5/Ns.

A l'aide des diverses estimations effectuées, l'estimation de canal peut elle aussi être corrigée :

- des décalages de fréquence et d'horloge :

$$\tilde{H}_p = \hat{H}_p\, e^{-j^*2\pi^*\frac{N-1}{N}(\Delta f N T_e + p\frac{\delta t}{T_e})}\ \frac{N\sin\left(\frac{\pi.(\Delta f N T_e + p\frac{\delta t}{T_e})}{N}\right)}{\sin\left(\pi.(\Delta f N T_e + p\frac{\delta t}{T_e})\right)}$$

$$\tilde{H}_p = \hat{H}_p\, e^{-j^*2\pi^*\frac{N-1}{N}(\Delta f N T_e + p\frac{\delta t}{T_e})} \quad \text{pour N suffisamment grand,}$$

- des déséquilibres IQ :

$$\tilde{\tilde{H}}_p = \frac{\alpha.^*\tilde{H}_p - \beta.t_p\,\tilde{H}_p^{*m}}{|\alpha|^2 + |\beta|^2} \quad \text{où} \quad tn = \frac{p_m(n)}{p(n)}$$

- du bruit, en effectuant la moyenne sur quelques (2M) sous-porteuses consécutives :

$$\tilde{\tilde{\tilde{H}}}_p = \frac{1}{2M}\sum_{k=p-M}^{p+M} \frac{\alpha.^*\tilde{H}_k - \beta.t_p\,\tilde{H}_k^{*m}}{|\alpha|^2 + |\beta|^2}$$

Du fait du caractère adaptatif de l'architecture de l'invention, il n'est rapidement plus nécessaire de corriger l'estimation de canal.

Il suffit, en pratique, de n'effectuer ces corrections d'estimation de canal que sur les toutes premières estimations de canal.

Un exemple de réalisation d'un processus d'adaptation selon l'invention comprend les étapes suivantes:

- correction ou compensation du décalage de fréquence entre émetteur et récepteur, à partir d'une estimation de ce décalage obtenue précédemment,
- compensation, dans le signal incident, des déséquilibres IQ, à partir d'une estimation de ces déséquilibres obtenue précédemment,
- estimation, dans le domaine fréquentiel, des déséquilibres IQ résiduels à partir d'un signal connu,
- estimation, dans le domaine fréquentiel, du décalage de fréquence et d'horloge résiduel entre émetteur et récepteur,
- mise à jour des grandeurs caractéristiques des déséquilibres IQ et du décalage de fréquence et d'horloge dans les systèmes de correction ou de compensation.

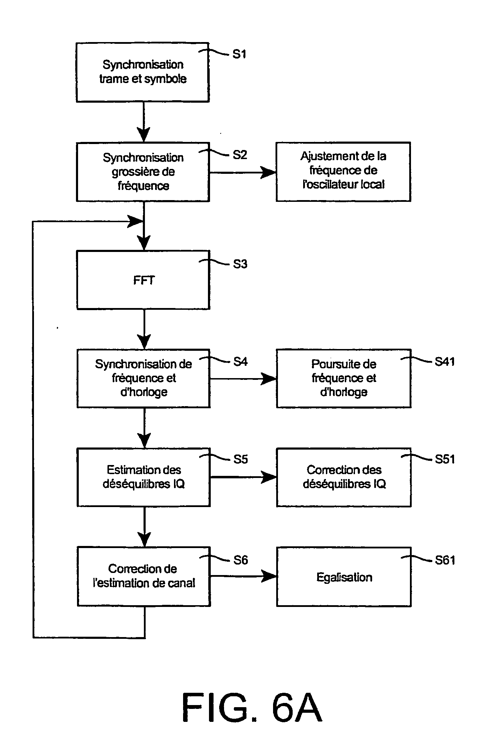

L'enchaînement de ces opérations de synchronisation et de compensations des imperfections peut s'effectuer selon le schéma de la figure 6A, donnée à titre d'exemple.

- étape S1 : synchronisation trame et symbole,
- étape S2 : synchronisation grossière de la fréquence, et ajustement de la fréquence de l'oscillateur local,
- étape S3 : transformée de Fourier rapide,
- étape S4 : synchronisation de la fréquence d'horloge, puis (S41) poursuite de fréquence et d'horloge (annulation des résidus).
- étape S5 : estimation des déséquilibre IQ, puis (S51) correction des déséquilibres IQ,
- étape S6 : correction de l'estimation de canal, puis (S61) égalisation.

Certaines opérations de ce schéma peuvent être permutées.

On peut par ailleurs étendre l'algorithme de compensation conjointe des décalages de fréquence et d'horloge et des déséquilibres IQ aux systèmes n'effectuant pas d'estimation de canal.

Il est possible d'effectuer la première estimation des déséquilibres IQ après la synchronisation grossière de fréquence, mais il est préférable de le faire après une première correction fine de décalage de fréquence, ce qui conduit à un meilleur rapport signal sur interférence et bruit.

L'adaptation des estimées peut s'effectuer à l'allumage du récepteur.

Une mise à jour périodique permet le suivi des variations des composants, car ces variations sont lentes par rapport à l'arrivée des pilotes.

L'architecture adaptative selon l'invention compense efficacement et rapidement les décalages de fréquence et d'horloge et les déséquilibres IQ conjointement, et permet de corriger automatiquement l'estimation de canal.

De plus aucune mise en mémoire n'est nécessaire et aucun délai de latence n'est subit. La mise à jour des estimées ne nécessite en outre qu'une séquence pilote.

Les simulations montrent que l'algorithme de compensation des déséquilibres IQ fonctionne pour des décalages de fréquence importants non corrigés.

L'utilisation du critère de minimisation de l'enveloppe du signal d'interférence, en particulier, rend l'algorithme d'adaptation robuste et rapide, même en présence d'un décalage de fréquence grossier. Le fait de ne considérer que les « transitions » du signal d'interférence rend par ailleurs l'algorithme moins complexe et moins sensible aux interférences inter porteuses.

Les algorithmes décrits dans la présente invention ont étés implantés dans une chaîne de communication MC-CDMA en SystemC.

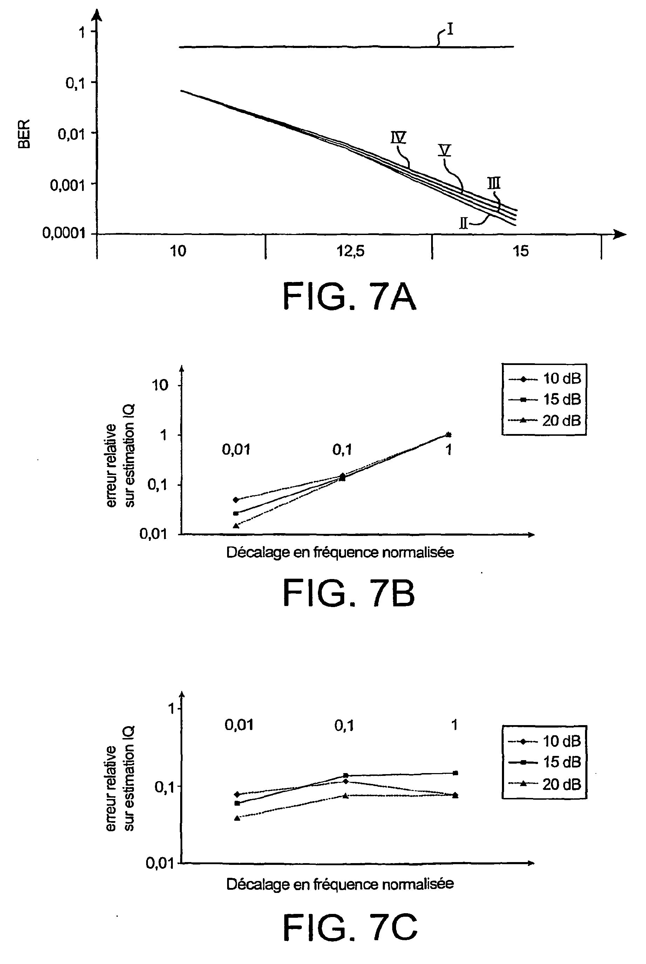

Des modèles d'offset de fréquence et de déséquilibres IQ dégradent fortement les performances du système. Les architectures adaptatives des figures 3 et 4 réussissent à compenser ces dégradations. C'est ce qui est illustré en figure 7A, qui indique le taux d'erreur binaire (BER) en fonction du rapport signal sur bruit (SNR, en dB) le canal utilisé étant le canal « bran E ».

La courbe I correspond au taux d'erreur binaire sans aucune compensation.

Les courbes II, III, IV et V respectivement aux architectures et algorithmes suivants :

- courbe II : architecture de la figure 3 et algorithme donné dans WO 03/101064,
- courbe III : architecture de la figure 3 et algorithme selon l'invention,
- courbe IV : architecture de la figure 4 et algorithme donné dans WO 03/101064,
- courbe V : architecture de la figure 4 et algorithme selon l'invention.

Les résultats obtenus pour l'architecture de la figure 3 ne prennent toute fois pas en compte les défauts de précision du synthétiseur.

Le tableau I ci-dessous rassemble des données de BER tirées de ces courbes, à 10, 12,5 et 15 kHz.

Tableau I

| Bran E | 0,058 | 0,0049 | 0, 000205 |
|---|---|---|---|
| Décalage en fréquence = 1 kHz et déséquilibre IQ = -10 dB/0,1 rad (Courbe I) | 0,5 | 0,5 | 0,5 |
| Courbe II | 0,059 | 0, 0049 | 0,000182 |
| Courbe III | 0,058 | 0,0047 | 0,000208 |
| Courbe IV | 0,062 | 0,0052 | 0,00023 |
| Courbe V | 0,065 | 0,0053 | 0,00022 |

Les courbes II - V laissent penser que les deux algorithmes, celui du document WO 03/101064 et celui selon l'invention, sont comparables. En fait, ces courbes montrent l'efficacité de l'architecture adaptative pour les deux algorithmes. Par ailleurs, ce que ne montrent pas ces courbes est la rapidité de convergence supérieure de l'algorithme selon l'invention, ce qui est reflété dans les courbes des figures 7B et 7C.

Ces figures 7B et 7C comparent les premières estimations des paramètres IQ sur les deux critères considérés en présence de décalage de fréquence non compensé. On remarque que l'algorithme de minimisation de l'enveloppe du signal d'interférence, conforme à la présente invention, est moins sensible à la présence d'un décalage de fréquence fort (figure 7C) que l'algorithme du document WO 03/101064 (figure 7B). Le fait de ne considérer que les « transitions » du signal d'interférence limite l'impact des interférences inter porteuses (mais rend l'algorithme un peu plus sensible aux bruits).

Il est également possible d'utiliser deux séquences pilotes choisies de telle façon que les transitions dues aux déséquilibres IQ soient opposées.

En effet, afin de ne pas surcharger la trame d'une communication par des séquences ne contenant pas de données, il peut être judicieux d'utiliser de tels pilotes, servant traditionnellement à l'estimation de canal et à la synchronisation fine de fréquence, durant l'estimation des décalages de fréquence et des déséquilibres IQ.

Cela permet de simplifier la complexité des algorithmes d'estimation et de correction des déséquilibres IQ et des décalages de fréquence, en n'ayant que très peu d'impact sur l'estimation de canal.

On peut par exemple considérer un premier pilote constitué d'une séquence pseudo aléatoire, et un deuxième pilote, identique au premier sur la première moitié de ses échantillons et opposé sur sa partie miroir, tels que par exemple $p_1$ et $p_2$ ci-dessous :

$$p_1 = \left[ \underbrace{1-1-1+1+1-1+1+1+1}_{+} \underbrace{-1-1-1+1-1+1+1-1}_{+} \right] \times \frac{1+j}{\sqrt{2}}$$

$$p_2 = \left[ \underbrace{1-1-1+1+1-1+1+1+1}_{+} \underbrace{+1+1+1-1+1-1-1+1}_{-} \right] \times \frac{1+j}{\sqrt{2}}$$

Etant donné qu'une séquence aléatoire donne après FFT un signal blanc gaussien, permettant d'estimer le canal sur toutes les fréquences des sous porteuses OFDM, ces pilotes comportant des séquences pseudo aléatoires conviennent bien pour effectuer une estimation de canal.

Par rapport aux modes de réalisation précédents, l'utilisation des pilotes ci-dessus permet notamment de simplifier la complexité des algorithmes d'estimation des déséquilibres IQ, du décalage de fréquence, et l'estimation de canal.

L'invention peut être mise en oeuvre selon une structure adaptative, telle que celle représentée sur la figure 3 ou la figure 4. Dans ce cas, le processus d'adaptation réalisé est identique à celui décrit précédemment, l'enchaînement de ces opérations de synchronisation et de compensations des imperfections pouvant s'effectuer selon le schéma de la figure 6A, donnée à titre d'exemple.

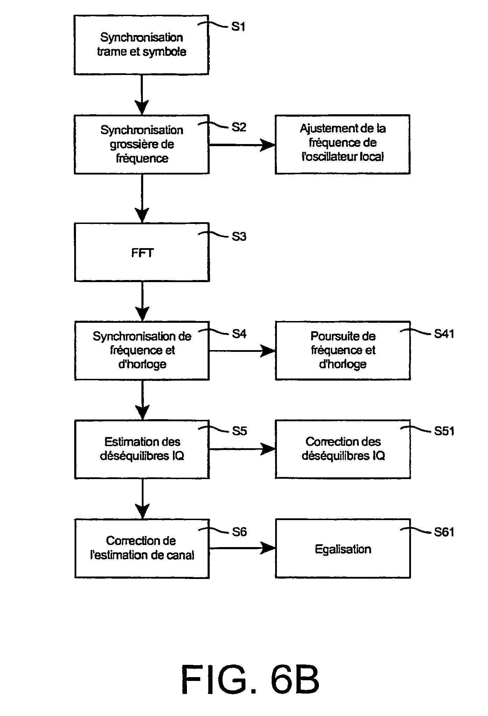

L'utilisation de ces pilotes permet également d'utiliser une chaîne de réception de structure non adaptative. Une telle structure diffère par exemple de celles représentées sur les figures 3 et 4 du fait que les estimées ne sont pas mises à jour dans les blocs d'estimation 110, 112, 114, 210, 212 et 214. Dans ce cas, les opérations de synchronisation et de compensations des imperfections peut s'effectuer selon le schéma de la figure 6B. Par rapport au diagramme de la figure 6A, le bloc S6 de la figure 6B ne boucle pas sur le bloc S3 (car structure non adaptative).

Avec de tels pilotes, et si on ne considère pas les interférences inter porteuses qui se comportent comme du bruit blanc, on obtient en sortie de la FFT :

$$S_{5_{1,p}} = \left( \alpha.p_{1,p}.H_p.e^{j.2\pi.\frac{N-1}{N}(\Delta f.T)} + \beta.p_{1,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

$$S_{5_{2,p}} = \left( \alpha.p_{2,p}.H_p.e^{j.2\pi.\frac{N-1}{N}(\Delta f.T)} + \beta.p_{2,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

Donc, pour $0 \le p < \dfrac{N}{2}$, $p_{1,p} = p_{2,p}$ et $p_{1,p}^{*m} = -p_{2,p}^{*m}$, on a :

$$S_{5_{1,p}} = \left( \alpha.p_{1,p}.H_p.e^{j.2\pi.\frac{N-1}{N}(\Delta f.T)} + \beta.p_{1,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

$$S_{5_{2,p}} = \left( \alpha.p_{1,p}.H_p.e^{j.2\pi.\frac{N-1}{N}(\Delta f.T)} - \beta.p_{1,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

Et pour $\dfrac{N}{2} \le p < N$, $p_{1,p} = -p_{2,p}$ et $p_{1,p}^{*m} = p_{2,p}^{*m}$, on a :

$$S_{5_{1,p}} = \left( \alpha.p_{1,p}.H_p.e^{j.2\pi.\frac{N-1}{N}(\Delta f.T)} + \beta.p_{1,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

$$S_{5_{2,p}} = \left( -\alpha.p_{1,p}.H_p.e^{j.2\pi.\frac{N-1}{N}(\Delta f.T)} + \beta.p_{1,p}^{*m}.H_p^{*m}.e^{-j.2\pi.\frac{N-1}{N}(\Delta f.T)} \right) \cdot \frac{\sin(\pi(\Delta f.T))}{N.\sin\left(\frac{\pi(\Delta f.T)}{N}\right)}$$

Comme les interférences provenant des déséquilibres IQ sont équiprobablement ajoutées ou soustraites, l'algorithme d'estimation de l'offset de fréquence n'est pas affecté par rapport aux modes de réalisation précédents. Ainsi, on obtient :

$$\Delta f_{est}.T_e = \frac{1}{2\pi}.\frac{N}{N-1}.E\left[angle(S_{5_{1,p}} p_{1,p}^* p_{2,p} S_{5_{2,p}}^*)\right] \text{ pour } 0 \le p < \frac{N}{2}$$

$$\Delta f_{est}.T_e = \frac{1}{2\pi}.\frac{N}{N-1}.E\Big[angle(S_{5_{1,p}}\,p_{1,p}^{\bullet}\,p_{2,p}S_{5_{2,p}}^{\bullet})-\pi\Big] \text{ pour } \frac{N}{2} \le p < N$$

Ainsi, en moyennant l'estimation de l'offset de fréquence sur toutes les sous porteuses disponibles, on s'affranchit du bruit et des interférences dues aux déséquilibres IQ, et on obtient une valeur plus précise de l'offset de fréquence.

Ensuite, l'estimation de canal peut être calculée en s'affranchissant de erreurs apportées par les déséquilibres IQ en effectuant la moyenne des estimations de canal obtenues pour chacun des pilotes, corrigées de l'offset de fréquence. On obtient alors :

pour $0 \le p < \dfrac{N}{2}$ :

$$\hat{H}_p = \frac{1}{2}\frac{p_{1,p}}{\alpha}e^{j.2\pi.\frac{N-1}{N}(\Delta f.T_e)}\left(S_{5_{1,p}}\frac{N.\sin\left(\frac{\pi(\Delta f_{est}.T_e)}{N}\right)}{\sin(\pi(\Delta f.T_e))} + S_{5_{2,p}}\frac{N.\sin\left(\frac{\pi(2\times\Delta f_{est}.T_e)}{N}\right)}{\sin(\pi(\Delta f.T_e))}e^{j.2\pi.\frac{N-1}{N}(\Delta f_{est}.T_e)}\right)$$

pour $\dfrac{N}{2} \le p < N$ :

$$\hat{H}_p = \frac{1}{2}\frac{p_{1,p}}{\alpha}e^{j.2\pi.\frac{N-1}{N}(\Delta f.T_e)}\left(S_{5_{1,p}}\frac{N.\sin\left(\frac{\pi(\Delta f_{est}.T_e)}{N}\right)}{\sin(\pi(\Delta f_{est}.T_e))} - S_{5_{2,p}}\frac{N.\sin\left(\frac{\pi(2\times\Delta f_{est}.T_e)}{N}\right)}{\sin(\pi(\Delta f_{est}.T_e))}e^{j.2\pi.\frac{N-1}{N}(\Delta f_{est}.T)}\right)$$

On réalise ensuite une estimation des déséquilibres IQ en évaluant le paramètre β selon les formules suivantes :

pour $0 \le p < \dfrac{N}{2}$ :

$$\beta_{est} = \frac{1}{2}\frac{p_{1,p}^m}{\hat{H}_p^{\bullet m}}e^{j.2\pi.\frac{N-1}{N}(\Delta f_{est}.T_e)}\left(S_{5_{1,p}}\frac{N.\sin\left(\frac{\pi(\Delta f_{est}.T_e)}{N}\right)}{\sin(\pi(\Delta f_{est}.T_e))} - S_{5_{2,p}}\frac{N.\sin\left(\frac{\pi(2\times\Delta f_{est}.T_e)}{N}\right)}{\sin(\pi(\Delta f_{est}.T_e))}e^{j.2\pi.\frac{N-1}{N}(\Delta f_{est}.T)}\right)$$

pour $\dfrac{N}{2} \le p < N$ :

$$\beta_{est} = \frac{1}{2}\frac{p_{1,p}^m}{\hat{H}_p^{\bullet m}}e^{j.2\pi.\frac{N-1}{N}(\Delta f.T_e)}\left(S_{5_{1,p}}\frac{N.\sin\left(\frac{\pi(\Delta f_{est}.T_e)}{N}\right)}{\sin(\pi(\Delta f_{est}.T_e))} + S_{5_{2,p}}\frac{N.\sin\left(\frac{\pi(2\times\Delta f_{est}.T_e)}{N}\right)}{\sin(\pi(\Delta f_{est}.T_e))}e^{j.2\pi.\frac{N-1}{N}(\Delta f_{est}.T)}\right)$$

Cette estimation peut également être moyennée sur N sous porteuses.

Il est également possible de calculer une estimation de $\alpha$ en utilisant la formule liant $\alpha$est et $\beta$est :

$$\alpha_{est} = \sqrt{1 - \text{Im}\{\beta_{est}\}^2} - j\frac{\text{Re}\{\beta_{est}\}\text{Im}\{\beta_{est}\}}{\sqrt{1 - \text{Im}\{\beta_{est}\}^2}}$$

Les symboles de données peuvent donc être compensées des déséquilibres IQ avant FFT par :

$$s_3(k) = \frac{\alpha_{est}^* s_2(k) - \beta_{est} s_2^*(k)}{|\alpha_{est}|^2 - |\beta_{est}|^2}$$ pour les déséquilibres IQ

$$s_4(k) = s_3(k).e^{-j*2\pi*\Delta f_{ca}*k*T_e}$$ pour l'offset de fréquence

On peut donc corriger conjointement et simplement l'estimation de canal et les données des déséquilibres IQ et offset de fréquence par :

- une estimation de l'offset de fréquence,
- et une estimation de canal,
- et une estimation des déséquilibres IQ,
- et une correction séquentielle ou simultanée des symboles de données avant FFT.

L'algorithme d'estimation des déséquilibres IQ, combiné à l'utilisation d'un premier pilote constitué d'une séquence pseudo aléatoire, et un deuxième pilote, identique au premier sur la première moitié de ses échantillons et opposé sur sa partie miroir, a été testé pour un système OFDM à 128 sous porteuses.

Les données théoriques sont :

Déséquilibre de gain = 0,1 => Re(β)=0,0995
Déséquilibre de phase = 0,1=> Im(β)=-0,0998

Le tableau ci-dessous représente la sensibilité de l'estimation des déséquilibres IQ par rapport au bruit du canal de propagation. La simulation est réalisée pour un canal de propagation avec évanouissements sélectifs.

| SNR (dB) | Estimation Re(β) | Estimation Im(β) | Erreur relative (%) |
|---|---|---|---|
| -5 | 0,081 | -0,033 | 49,2 |
| 0 | 0,113 | -0,109 | 11,58 |
| 5 | 0,106 | -0,109 | 7,97 |
| 10 | 0,103 | -0,106 | 5,03 |
| 15 | 0,102 | -0,104 | 3,45 |
| 20 | 0,101 | -0,102 | 1,87 |
| 25 | 0,101 | -0,101 | 1,35 |
| 30 | 0,101 | -0,1 | 1,07 |

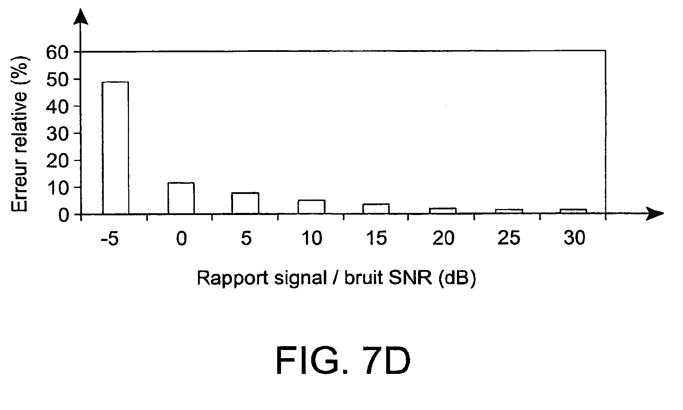

La figure 7D représente la sensibilité de l'estimation des déséquilibres IQ par rapport au bruit du canal de propagation. Sur cette figure, on voit que par exemple pour un rapport signal sur bruit compris entre 10 et 20 dB, l'erreur relative est comprise entre environ 5% et 2%, ce qui montre la qualité de l'estimation réalisée.

Les résultats montrent que l'on a une bonne robustesse de l'algorithme par rapport au bruit du canal, et cela quel que soit le canal de propagation. Les résultats obtenus après correction, en terme de taux d'erreur binaire, sont eux aussi très bons, puisque l'on retrouve après estimation et correction les résultats obtenus pour un système sans dégradation.

L'invention s'applique à tous les récepteurs radio multi porteuses en général, et notamment dans le cadre des réseaux locaux sans fil (WLAN 802.11, Hiperlan II), de la radiodiffusion et diffusion de vidéo numérique (DAB, DVB), de la téléphonie mobile, de quatrième génération.

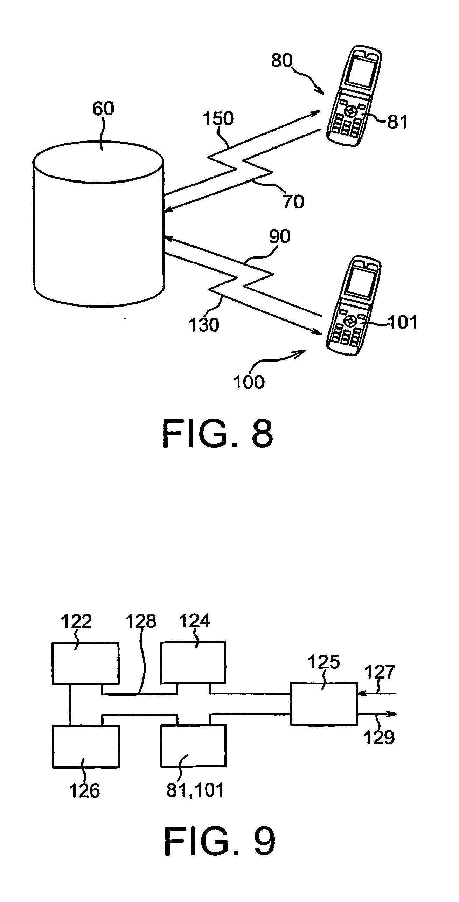

En ce qui concerne cette dernière application, un dispositif mobile et un système de transmission mettant en oeuvre l'invention vont être décrits en liaison avec les figures 8 et 9.

Le système comporte un réseau 60 de diffusion de téléphonie mobile (RTM), composé d'un serveur de réseau et d'une infrastructure de transmission, par exemple hertzienne, et d'un parc d'appareils de réception, sans fils, mobiles ou portables, par exemple des téléphones mobiles 80, 100, associés au réseau.

Des messages 130, 150 sont envoyés aux appareils portables 80, 100, tandis que ceux-ci peuvent réémettre des informations 70, 90 en retour. Chaque appareil mobile de communication offre une structure, telle qu'illustrée sur la figure 9, et est équipé d'un microprocesseur et de zones mémoires.

L'ensemble comporte au moins un processeur 122, un ensemble de mémoires RAM 124 (pour le stockage de données), de mémoires ROM 126 (par exemple pour le stockage d'instructions de programme). Ces divers éléments sont reliés par un bus 128.

Un élément périphérique, tel qu'un clavier (indiqué par les références 81 et 101 sur la figure 8), permet à un utilisateur d'entrer des données, par exemple en réponse à un message affiché sur son écran de visualisation.

D'autres éléments périphériques peuvent être utilisés pour effectuer l'entrée de données comme par exemple un dispositif de commande vocale ou un écran tactile.

Les données peuvent être également entrées en utilisant une combinaison de périphériques tels que ceux indiqués ci-dessus à titre d'exemple.

La référence 125 désigne des moyens de gestion d'entrées 127 et de sorties 129.

Chaque appareil peut aussi être considéré comme mettant en oeuvre les fonctionnalités décrites ci-dessus en liaison avec les figures 3, 4, 6A ou 6B ou à un des procédés selon l'invention tels que décrits ci-dessus.

Des données relatives à un système d'exploitation sont mémorisées dans une zone mémoire de chaque appareil mobile.

Dans le cas d'un téléphone mobile peut être ajoutée une carte SIM (GSM) ou USIM (UMTS) et des moyens de lecture de cette carte.

Des données de programme pour effectuer des corrections du déséquilibre IQ et de décalages de fréquence et d'horloge peuvent être mémorisées dans une zone mémoire de chaque appareil mobile.

Un dispositif mobile tel que les dispositifs 81, 101 dispose de moyens de mémorisation pour mémoriser les données relatives aux traitements exposés ci-dessus, et notamment les divers paramètres utilisés dans les formules ci-dessus.

Le calcul de chaque correction du déséquilibre RSIB peut être effectué par chaque dispositif mobile lui-même, lorsqu'il reçoit des pilotes. Contrairement au procédé décrit dans le document WO 03/101064, le procédé selon l'invention ne nécessite pas deux séquences consécutives, une seule séquence (c'est-à-dire un symbole OFDM) suffit.

Par rapport aux techniques connues et notamment celle du document WO 03/101064, l'invention offre les avantages suivants.

Tout d'abord, elle utilise pilotes ou séquences d'apprentissage indifféremment. Il n'est pas nécessaire d'avoir en permanence deux séquences d'apprentissage longues.

L'invention utilise la réception de ces séquences connues directement après Transformée de Fourier, et ne requiert pas d'estimation de canal (quand bien même il peut y avoir une estimation de canal).

En outre, l'architecture de l'invention est adaptative.

Selon l'invention, le critère préféré d'estimation des déséquilibres IQ se base sur la minimisation de l'enveloppe du signal d'interférence, et ce seul critère d'estimation des déséquilibres IQ peut être utilisé quelque soit la valeur de l'offset de fréquence, supérieure ou inférieure à 15 kHz.

Enfin, la correction de l'estimation de canal n'est plus nécessaire après la première trame.

En choisissant des pilotes de telle façon que les transitions dues aux déséquilibres IQ soient opposées, on peut réaliser une compensation simple et efficace des déséquilibres IQ et des offsets de fréquences. La plupart des systèmes de transmission de type OFDM peuvent intégrer sans difficultés les algorithmes fonctionnant avec ces pilotes.

**Revendications**

1. Procédé de correction d'un signal reçu et numérisé par un récepteur sans fil, comportant un procédé de correction du déséquilibre IQ d'un récepteur, en présence d'un décalage de fréquence et d'horloge, pour obtenir une estimation corrigée du déséquilibre IQ, comportant :

   - une estimation du déséquilibre IQ, en fonction des variations résiduelles de déséquilibre depuis une estimation précédente du déséquilibre IQ, l'estimation du déséquilibre IQ s'effectuant à partir de pilotes, ou séquences d'apprentissage, engendrant des transitions dues aux déséquilibres IQ qui sont opposées,
   - une correction des décalages de fréquence et d'horloge et du déséquilibre IQ en fonction de l'estimation du déséquilibre, pour obtenir une estimation corrigée du déséquilibre IQ,

- une correction du signal en fonction de l'estimation corrigée du déséquilibre IQ, puis
- une opération de transformation de Fourier du signal corrigé.

**2.** Procédé selon la revendication 1, l'estimation du déséquilibre IQ s'effectuant à partir de deux pilotes, ou séquences d'apprentissage.

**3.** Procédé selon l'une quelconque des revendications 1 ou 2, l'estimation du déséquilibre IQ s'effectuant à partir de deux pilotes ou séquences d'apprentissage $p_1$ et $p_2$, $p_1$ étant constituée d'une séquence pseudo aléatoire et $p_2$ étant identique à $p_1$ sur la première moitié de ses échantillons et opposée à $p_1$ sur la deuxième moitié de ses échantillons.

**4.** Procédé selon l'une quelconque des revendications 1 à 3, les variations résiduelles de déséquilibre étant calculées en fonction d'un signal d'interférence de porteuses et de sous-porteuses miroirs.

**5.** Procédé selon la revendication 4, les variations résiduelles du déséquilibre étant calculées selon un critère de minimisation de l'enveloppe du signal d'interférence.

**6.** Procédé selon la revendication 4 ou 5, les variations résiduelles de déséquilibre étant calculées en fonction d'un paramètre $|E|^2$ caractéristique de l'enveloppe dudit signal d'interférence.

**7.** Procédé selon la revendication 6, seules les transitions du signal d'interférence étant prises en compte.

**8.** Procédé selon la revendication 7, dans lequel :

- on mesure la valeur des échantillons complexes fréquentiels de pilote au voisinage des transitions,
- on compare ces échantillons aux échantillons du pilote émis et on en extrait le paramètre $|E|^2$ caractéristique de l'enveloppe des interférences des déséquilibres IQ.

**9.** Procédé selon l'une des revendications 6 à 8 , le paramètre $|E|^2$ étant égal ou proportionnel à :

$$\left|E(n)\right|^2 = \left|\frac{(S_s(n)p(n+1) - S_s(n+1)p(n))p_{in}(n)}{(p(n+1)p_m(n) - p(n)p_m(n+1))S_s(n)^{m*}}\right|^2$$

où $S_5(n)$ est le signal reçu sur la sous-porteuse « n », $S_{5m}(n)$ le signal reçu sur la sous-porteuse miroir, $p(n)$ la valeur du pilote sur la sous-porteuse « n » et $p_m(n)$ le pilote sur la sous-porteuse miroir.

**10.** Procédé selon l'une des revendications 6 à 8, le paramètre $|E|^2$ étant égal ou proportionnel à :

$$\left|E(n)\right|^2 = \left|\frac{(S_s(n)p(n+1) - S_s(n+1)p(n))p_m(n) - (S_s(n+1)p(n+2) - S_s(n+2)p(n+1))p_m(n+1)}{S_s(n)^{m*}(p(n+1)p_m(n) - p(n)p_m(n+1)) - S_{s\,m}(n+1)^{\cdot}(p(n+2)p_m(n+1) - p(n+1)p_m(n+2))}\right|^2$$

où $S_5(n)$ est le signal reçu sur la sous-porteuse « n », $S_{5m}(n)$ le signal reçu sur la sous-porteuse miroir, p(n) la valeur du pilote sur la sous-porteuse « n » et $p_m(n)$ le pilote sur la sous-porteuse miroir.

**11.** Procédé selon l'une des revendications 6 à 8, l'estimation βest des déséquilibre IQ étant corrigée, par rapport à l'estimation précédente, proportionnellement à $\dfrac{\partial |E|^2}{\partial \beta'}$ , où β' représente le déséquilibre IQ résiduel.

**12.** Procédé selon l'une des revendications 1 à 11, les variations résiduelles de déséquilibre étant obtenues à partir du signal (S4) obtenu par transformée de Fourier rapide (FFT) dans le récepteur.

**13.** Procédé selon l'une des revendications 1 à 12, une première estimation des déséquilibres IQ étant effectuée après une synchronisation grossière de fréquence.

**14.** Procédé selon l'une des revendications 1 à 12, une première estimation des déséquilibres IQ étant effectuée après une correction fine de décalage de fréquence.

**15.** Procédé selon l'une des revendications 1 à 12, comportant en outre une étape d'estimation de canal et de correction de cette estimation en fonction des décalages de fréquence, d'horloge et des déséquilibres IQ.

**16.** Procédé selon l'une des revendications 1 à 15, la correction des décalages de fréquence et d'horloge étant effectuée à partir du signal (S4) obtenu par transformée de Fourier rapide (FFT) dans le récepteur.

**17.** Procédé selon l'une des revendications 1 à 15, la correction des décalages de fréquence et d'horloge étant effectuée à partir d'une estimation de canal.

**18.** Procédé selon l'une des revendications 1 à 15, la correction des décalages de fréquence et d'horloge étant effectuée à partir de deux pilotes ou séquences d'apprentissage $p_1$ et $p_2$ consécutifs en temps ou entrecoupés de symboles de données.

**19.** Procédé selon l'une des revendications 1 à 18, comportant en outre une étape d'estimation de canal.

**20.** Procédé selon la revendication 19, l'estimation de canal étant corrigée en fonction du déséquilibre IQ.

**21.** Procédé selon la revendication 19 ou 20, l'estimation de canal étant corrigée en fonction de décalages d'horloge et/ou de fréquences.

**22.** Dispositif récepteur sans fil comportant :

- des moyens de réception et de numérisation d'un signal,
- des moyens (122, 124, 126) de correction d'un déséquilibre IQ, comportant :
- des moyens d'estimation du déséquilibre IQ, en fonction des variations résiduelles de déséquilibre depuis une estimation précédente du déséquilibre IQ , l'estimation du déséquilibre IQ s'effectuant à partir de pilotes ou séquences d'apprentissage engendrant des transitions dues aux déséquilibres IQ opposées,
- des moyens de correction de décalages de fréquence et d'horloge, et du déséquilibre IQ, en fonction de l'estimation du déséquilibre IQ, pour obtenir une estimation corrigée du déséquilibre IQ,
le dispositif récepteur sans fil comportant en outre :

- des moyens de correction du signal en fonction du déséquilibre IQ,
- des moyens pour réaliser une transformation de Fourier du signal corrigé.

**23.** Dispositif selon la revendication 22, l'estimation du déséquilibre IQ s'effectuant à partir de deux pilotes, ou séquences d'apprentissage.

**24.** Dispositif selon l'une des revendications 22 ou 23, l'estimation du déséquilibre IQ s'effectuant à partir de deux pilotes ou séquences d'apprentissage $p_1$ et $p_2$, $p_1$ étant constitué par exemple d'une séquence pseudo aléatoire et $p_2$ étant par exemple identique à $p_1$ sur la première moitié de ses échantillons et opposé à $p_1$ sur la deuxième moitié de ses échantillons.

**25.** Dispositif selon l'une des revendications 22 à 24, les variations résiduelles de déséquilibre étant calculées en fonction d'un signal d'interférence de porteuses et de sous sous-porteuses miroirs.

**26.** Dispositif selon la revendication 22 à 25, les variations résiduelles du déséquilibre étant calculées selon un critère de minimisation de l'enveloppe du signal d'interférence.

**27.** Dispositif selon la revendication 25 ou 26, les variations résiduelles de déséquilibre étant calculées en fonction d'un paramètre $|E|^2$ caractéristique de l'enveloppe dudit signal d'interférence.

**28.** Dispositif selon la revendication 27, seules les transitions du signal d'interférence étant prises en compte.

**29.** Dispositif selon la revendication 28, comportant:

- des moyens de mesure de la valeur des échantillons complexes fréquentiels de pilote au voisinage des transitions,
- des moyens de comparaison de ces échantillons aux échantillons du pilote émis et de calcul du paramètre $|E|^2$ caractéristique de l'enveloppe des interférences des déséquilibres IQ.

**30.** Dispositif selon l'une des revendications 27 à 29, l'estimation β est des déséquilibre IQ étant corrigée, par rapport à l'estimation précédente, proportionnellement à $\dfrac{\partial |E|^2}{\partial \beta'}$ , où β' représente le déséquilibre IQ résiduel.

**31.** Dispositif selon l'une des revendications 22 à 30, les variations résiduelles de déséquilibre étant obtenues à partir du signal obtenu par transformée de Fourier rapide (FFT) dans le récepteur.

**32.** Dispositif selon l'une des revendications 22 à 31, une première estimation des déséquilibres IQ étant effectuée après une synchronisation grossière de fréquence.

**33.** Dispositif selon l'une des revendications 22 à 31, une première estimation des déséquilibres IQ étant effectuée après une correction fine de décalage de fréquence.

**34.** Dispositif selon l'une des revendications 22 à 32, comportant des moyens d'estimation de canal et de correction de cette estimation en fonction des décalages de fréquence, d'horloge et des déséquilibres IQ.

**35.** Dispositif selon l'une des revendications 22 à 34, la correction des décalages de fréquence et d'horloge étant effectuée à partir du signal (S4) obtenu par transformée de Fourier rapide (FFT) dans le récepteur.

**36.** Dispositif selon l'une des revendications 22 à 35, la correction des décalages de fréquence et d'horloge étant effectuée à partir d'une estimation de canal.

**37.** Dispositif selon l'une des revendications 22 à 35, la correction des décalages de fréquence et d'horloge étant effectuée à partir de deux pilotes ou séquences d'apprentissage $p_1$ et $p_2$ consécutifs en temps ou entrecoupés de symboles de données.

**38.** Dispositif selon l'une des revendications 22 à 37, comportant en outre des moyens d'estimation de canal.

**39.** Dispositif selon la revendication 38, l'estimation de canal étant corrigée en fonction du déséquilibre IQ.

**40.** Dispositif selon la revendication 38 ou 39, l'estimation de canal étant corrigée en fonction de décalages d'horloge et/ou de fréquences.

**41.** Programme informatique comportant les instructions pour mettre en oeuvre un procédé selon l'une des revendications 1 à 21.

**42.** Support de données, pouvant être lu par un système informatique, comportant des données sous forme codée, pour mettre en oeuvre un procédé selon l'un des revendications 1 à 21.

**43.** Produit logiciel comportant un support de données susceptible d'être lu par un système informatique, permettant de mettre en oeuvre un procédé selon l'une des revendications 1 à 21.

**Claims**

**1.** Method for correction of a signal received and digitized by a wireless receiver, including a method for correction of the IQ imbalance of a receiver, in the presence of a frequency and clock offset, in order to obtain a corrected estimate of the IQ imbalance, including:

- an IQ imbalance estimate, according to imbalance residual variations since a preceding estimate of the IQ imbalance, said IQ imbalance estimate being carried out from pilots, or learning sequences, which give rise to transitions due to the IQ imbalances which are opposite,
- a correction of the frequency and clock offsets and of the IQ imbalance according to the estimate of the imbalance, in order to obtain a corrected estimate of the IQ imbalance,
- a correction of the signal according to the corrected estimate of the IQ imbalance, and
- a Fourier transform operation of the corrected signal.

2. Method according to claim 1, the IQ imbalance estimate being carried out from two pilots or learning sequences.

3. Method according to one of claims 1 or 2, the IQ imbalance estimate being carried out from two pilots or learning sequences, $p_1$ and $p_2$, $p_1$ being composed of a pseudo-random sequence and $p_2$ being identical to $p_1$ in the first half of its samples and opposite to $p_1$ in the second half of its samples.

4. Method according to one of claims 1 to 3, the imbalance residual variations being calculated according to an interference signal of carriers and mirror subcarriers.

5. Method according to claim 4, the residual variations of the imbalance being calculated according to a criterion for minimising the envelope of the interference signal.

6. Method according to one of claims 4 or 5, the imbalance residual variations being calculated according to a characteristic parameter $|E|^2$ of the envelope of said interference signal.

7. Method according to claim 6, only the transitions of the interference signal being taken into account.

8. Method according to claim 7, in which:

   - we measure the value of the pilot complex frequency samples in the neighbourhood of the transitions,
   - we compare these samples to the samples of the transmitted pilot and from these we extract the characteristic parameter $|E|^2$ of the envelope of the IQ imbalances interferences.

9. Method according to one of claims 6 to 8, the parameter $|E|^2$ being equal or proportional to:

$$|E(n)|^2 = \left| \frac{(S_5(n)p(n+1) - S_5(n+1)p(n))p_m(n)}{(p(n+1)p_m(n) - p(n)p_m(n+1))S_5(n)^{m*}} \right|^2$$

where $S_5(n)$ is the received signal on subcarrier "n", $S_{5m}(n)$ is the received signal on the mirror subcarrier, $p(n)$ is the value of the pilot on subcarrier "n" and $p_m(n)$ is the pilot on the mirror subcarrier.

10. Method according to one of claims 6 to 8, the parameter $|E|^2$ being equal or proportional to:

$$|E(n)|^2 = \left| \frac{(S_5(n)p(n+1) - S_5(n+1)p(n))p_m(n) - (S_5(n+1)p(n+2) - S_5(n+2)p(n+1))p_m(n+1)}{S_5(n)^{m*}(p(n+1)p_m(n) - p(n)p_m(n+1)) - S_{5\,m}(n+1)^*(p(n+2)p_m(n+1) - p(n+1)p_m(n+2))} \right|^2$$

where $S_5(n)$ is the received signal on the subcarrier "n", $S_{5m}(n)$ is the received signal on the mirror subcarrier, $p(n)$ is the value of the pilot on subcarrier "n" and $p_m(n)$ is the pilot on the mirror subcarrier.

11. Method according to one of claims 6 to 8, the βest estimate of the IQ imbalances being corrected, in relation to the preceding estimate, proportionally to $\dfrac{\partial |E|^2}{\partial \beta'}$ , where β' represents the residual IQ imbalance.

**EP 1 815 657 B1**

**12.** Method according to one of claims 1 to 11, the imbalance residual variations being obtained from the signal (S4) obtained by fast Fourier transform (FFT) in the receiver.

**13.** Method according to one of claims 1 to 12, a first IQ imbalances estimate being carried out after a coarse frequency synchronisation.

**14.** Method according to one of claims 1 to 12, a first IQ imbalances estimate being carried out after a fine frequency offset correction.

**15.** Method according to one of claims 1 to 12, also comprising a step of channel estimate and correction of this estimate according to the frequency and clock offsets and of the IQ imbalances.

**16.** Method according to one of claims 1 to 15, correction of the frequency and clock offsets being carried out from the signal (S4) obtained by Fast Fourier Transform (FFT) in the receiver.

**17.** Method according to one of claims 1 to 15, the correction of the frequency and clock offsets being carried out from a channel estimate.

**18.** Method according to one of claims 1 to 15, the correction of the frequency and clock offsets being carried out from two pilots or learning sequences, $p_1$, and $p_2$, that are consecutive in time or with interleaved data symboles.

**19.** Method according to one of claims 1 to 18, also comprising a channel estimate step.

**20.** Method according to claim 19, channel estimate being corrected according to the IQ imbalance.

**21.** Method according to one of claim 19 or 20, channel estimate being corrected according to clock and/or frequency offsets.

**22.** Wireless receiver device comprising:

   - means for receiving and digitizing a signal,
   - means (122, 124, 126) for correction of an IQ imbalance, including:
   - means for estimating the IQ imbalance, according to imbalance residual variations since a preceding estimate of the IQ imbalance, the IQ imbalance estimate being carried out from pilots or learning sequences which give rise to transitions due to the opposite IQ imbalances,
   - means for correcting frequency and clock offsets and IQ imbalance, according to the IQ imbalance estimate, in order to obtain a corrected estimate of the IQ imbalance,
   the wireless receiver device also comprising:

      - means for correcting the signal according to th IQ imbalance,
      - means for carrying out a Fourier transform operation of the corrected signal.

**23.** Device according to claim 22, the IQ imbalance estimate being carried out from two pilots, or learning sequences.

**24.** Device according to one of claims 22 or 23, the IQ imbalance estimate being carried out from two pilots or learning sequences, $p_1$ and $p_2$, $p_1$ being composed, for example, of a pseudo-random sequence and $p_2$ being identical, for exemple, to $p_1$ in the first half of its samples and opposite to $p_1$ in the second half of its samples.

**25.** Device according to one of claims 22 to 24, the imbalance residual variations being calculated according to an interference signal of carriers and mirror subcarriers.

**26.** Device according to one of claims 22 to 25, the residual variations of the imbalance being calculated according to a criterion for minimising the envelope of the interference signal.

**27.** Device according to one of claims 25 or 26, the imbalance residual variations being calculated according to a characteristic parameter $|E|^2$ of the envelope of the interference signal.

**28.** Device according to claim 27, only the transitions of the interference signal being taken into account.

27

29. Device according to claim 28, including:

   - means for measuring the value of the pilot frequency complex samples in the neighbourhood of the transitions,
   - means for comparing these samples to the samples of the transmitted pilot and for calculating the characteristic parameter $|E|^2$ of the envelope of the IQ imbalance interferences.

30. Device according to one of claims 27 to 29, the βest estimate of the IQ imbalances being corrected, in relation to the preceding estimate, proportionally to $\dfrac{\partial |E|^2}{\partial \beta'}$, where β' represents the residual IQ imbalance.

31. Device according to one of claims 22 to 30, the imbalance residual variations being obtained from the signal obtained by fast Fourier transform (FFT) in the receiver.

32. Device according to one of claims 22 to 31, a first IQ imbalances estimate being carried out after a coarse frequency synchronisation.

33. Device according to one of claims 22 to 31, a first IQ imbalances estimate being carried out after a fine frequency offset correction.

34. Device according to one of claims 22 to 32, including means for estimating a channel and correcting this estimate according to the frequency and clock offsets and of the IQ imbalances.

35. Device according to one of claims 22 to 34, the correction of the frequency and clock offsets being carried out from the signal (S4) obtained by fast Fourier transform (FFT) in the receiver.

36. Device according to one of claims 22 to 35, the correction of the frequency and clock offsets being carried out from a channel estimate.

37. Device according to one of claims 22 to 35, the correction of the frequency and clock offsets being carried out from two pilots or learning sequences, $p_1$ and $p_2$, that are consecutive in time or with interleaved data symbols.

38. Device according to one of claims 22 to 37, also including channel estimate means.

39. Device according to claim 38, channel estimate being corrected according to the IQ imbalance.

40. Device according to one of claims 38 or 39, channel estimate being corrected according to clock and/or frequency offsets.

41. Computer program comprising instructions to implement a method according to one of claims 1 to 21.

42. Data medium, capable of being read by a computer system, comprising data in coded form, to implement a method according to one of claims 1 to 21.

43. Software product comprising a data medium suitable to be read by a computer system, and used to implement a method according to one of claims 1 to 21.


**Patentansprüche**

1. Verfahren zur Korrektur eines von einem drahtlosen Empfänger empfangenen und digitalisierten Signals, aufweisend ein Verfahren zur Korrektur des Ungleichgewichts IQ eines Empfänger, in Gegenwart eines Frequenz- und Zeitgeber-Versatzes, um eine korrigierte Schätzung des Ungleichgewichts IQ zu erhalten, aufweisend:

   - eine Schätzung des Ungleichgewichts IQ in Funktion der restlichen Ungleichgewichtsvariationen seit einer vorhergehenden Schätzung des Ungleichgewichts IQ, wobei die Schätzung des Ungleichgewichts IQ ausgehend von Piloten oder Lehrsequenzen durchgeführt wird, welche Übergänge aufgrund der entgegengesetzen Ungleichgewichte IQ erzeugen;
- eine Korrektur der Frequenz- und Zeitgeber-Versätze und des Ungleichgewichts IQ in Funktion von der Schätzung des Ungleichgewichts IQ, um eine korrigierte Schätzung des Ungleichgewichts IQ zu erhalten.
- eine Korrektur des Signals in Funktion von der korrigierten Schätzung des Ungleichgewichts IQ, dann
- eine Fourier-Transformations-Operation des korrigierten Signals.

2. Verfahren nach Anspruch 1, wobei die Schätzung des Ungleichgewichts IQ ausgehend von zwei Piloten oder Lehrsequenzen durchgeführt wird.

3. Verfahren nach einem der Ansprüche 1 oder 2, wobei die Schätzung des Ungleichgewichts IQ ausgehend von zwei Piloten oder Lehrsequenzen $p_1$ und $p_2$ durchgeführt wird, wobei $p_1$ aus einer pseudoaleatorischen Sequenz gebildet ist und $p_2$ auf der ersten Hälfte ihrer Abtastwerte identisch mit $p_1$ und auf der zweiten Hälfte ihrer Abtastwerte $p_1$ entgegengesetzt ist.

4. Verfahren nach einem der Ansprüche 1 bis 3, wobei die restlichen Ungleichgewichtsvariationen in Funktion von einem Interferenzsignal von Trägerwellen und Spiegel-Unterträgern berechnet werden.

5. Verfahren nach Anspruch 4, wobei die restlichen Variationen des Ungleichgewichts nach einem Minimalisierungskriterium der Umhüllenden des Interferenzsignals berechnet werden,

6. Verfahren nach Anspruch 4 oder 5, wobei die restlichen Variationen des Ungleichgewichts in Funktion von einem Parameter $|E|^2$ berechnet werden, der charakteristisch für die Umhüllende des Interferenzsignals ist.

7. Verfahren nach Anspruch 6, wobei nur die Übergänge des Interferenzsignals berücksichtigt werden.

8. Verfahren nach Anspruch 7, bei welchem:

- man den Wert der komplexe Pilot-Frequenz-Abtastwerte in der Nachbarschaft der Übergänge misst,
- man diese Abtastwerte mit den ausgesendeten Abtastwerten des Piloten vergleicht und man den für die Umhüllende der Interferenzen der Ungle3.clagewichte IQ charakteristischen Parameter $|E|^2$ extrahiert.

9. Verfahren nach einem der Ansprüche 6 bis 8, wobei der Parameter $|E|^2$ gleich oder proportional ist zu:

$$|E(n)|^2 = \left| \frac{(S_s(n)p(n+1) - S_s(n+1)p(n))p_m(n)}{(p(n+1)p_m(n) - p(n)p_m(n+1))S_s(n)^{m*}} \right|^2$$

worin $S_5(n)$ das auf dem Unterträger "n" empfangene Signal ist, $S_{5m}(n)$ das auf dem Spiegel-Unterträger empfangene Signal ist, $p(n)$ der Wert des Piloten auf dem Unterträger "n" und $p_m(n)$ der Pilot auf dem Spiegel-Unterträger ist.

10. Verfahren nach einem der Ansprüche 6 bis 8, wobei der Parameter $|E|^2$ gleich oder proportional ist zur:

$$|E(n)|^2 = \left| \frac{(S_s(n)p(n+1) - S_s(n+1)p(n))p_m(n) - (S_s(n+1)p(n+2) - S_s(n+2)p(n+1))p_m(n+1)}{S_s(n)^{m*}(p(n+1)p_m(n) - p(n)p_m(n+1)) - S_{s\,m}(n+1)^*(p(n+2)p_m(n+1) - p(n+1)p_m(n+2))} \right|^2$$

worin $S_5(n)$ das auf dem Unterträger "n" empfangene Signal ist, $S_{5m}(n)$ das auf dem Spiegel-Unterträger empfangene Signal ist, $p(n)$ der Wert des Piloten auf dem Unterträger "n" und $p_m(n)$ der Pilot auf dem Spiegel-Unterträger ist.

11. Verfahren nach einem der Ansprüche 6 bis 8, wobei die Schätzung βest der Ungleichgewichte IQ bezüglich der vorhergehenden Schätzung proportional zu

$$\frac{\partial |E|^2}{\partial \beta'}$$

korrigiert ist, wo β' das restliche Ungleichgewicht IQ darstellt.

12. Verfahren nach einem der Ansprüche 1 bis 11, wobei die restlichen Ungleichgewichtsvariationen ausgehend von dem durch die schnelle Fourier-Transformierte (FFT) in dem Empfänger erhaltenen Signal (S4) erhalten sind.

13. Verfahren nach einem der Ansprüche 1 bis 12, wobei eine erste Schätzung der Ungleichgewichte IQ nach einer groben Frequenzsynchronisiemng durchgeführt wird.

14. Verfahren nach einem der Ansprüche 1 bis 12, wobei eine erste Schätzung der Ungleichgewichte IQ nach einer Frequenzversatz-Feinkorrektur durchgeführt wird.

15. Verfahren nach einem der Ansprüche 1 bis 12, das ferner einen Schritt der Kanalschätzung und der Korrektur dieser Schätzung in Funktion von den Versätzen der Frequenz, des Zeitgebers und der Ungleichgewichte IQ umfasst.

16. Verfahren nach einem der Ansprüche 1 bis 15, wobei die Korrektur der Versätze von Frequenz und Zeitgebern ausgehend von dem durch die schnelle Fourier-Transformierte (FFT) in dem Empfänger erhaltenen Signal (S4) erhalten ist.

17. Verfahren nach einem der Ansprüche 1 bis 15, wobei die Korrektur der Frequenz- und Zeitgeberversätze ausgehend von einer Kanalschätzung durchgeführt wird.

18. Verfahren nach einem der Ansprüche 1 bis 15, wobei die Korrektur der Frequenz- und Zeitgeberversätze ausgehend von zwei Piloten oder Lehrsequenzen $p_1$ und $p_2$ durchgeführt wird, die in der Zeit folgen oder von Datensymbolen durchsetzt sind.

19. Verfahren nach einem der Ansprüche 1 bis 18, das ferner einen Schritt der Kanalschätzung aufweist.

20. Verfahren nach Anspruch 19, wobei die Kanalschätzung in Funktion von dem Ungleichgewicht IQ korrigiert wird.

21. Verfahren nach Anspruch 19 oder 20, wobei die Kanalschätzung in Funktion von Zeitgeberversätzen und/oder Frequenzen korrigiert wird.

22. Drahtlose Empfängervorrichtiing, aufweisend:

    - Mittel zum Empfang und zur Digitalisierung eines Signals,
    - Mittel (122, 124, 126) zur Korrektur eines Ungleichgewichts IQ, aufweisend:
    - Mittel zum Schätzen des Ungleichgewichts IQ in Funktion von den restlichen Ungleichgewichtsvariationen seit einer vorhergehenden Schätzung des Ungleichgewichts IQ, wobei die Schätzung des Ungleichgewichts IQ ausgehend von Piloten oder Lehrsequenzen durchgeführt wird, welche Übergänge aufgrund der entgegengesetzten Ungleichgewichte IQ erzeugen,
    - Mittel zur Korrektur von Frequenz- und Zeitgeberversätzen und des Ungleichgewichts IQ in Funktion von der Schätzung des Ungleichgewichts IQ, um eine korrigierte Schätzung des Ungleichgewichts IQ zu erhalten, wobei die drahtlose Empfängervorrichtung ferner aufweist:
    - Mittel zur Korrektur des Signals in Funktion von dem Ungleichgewicht IQ,
    - Mittel zur Realisierung einer Fourier-Transformation des korrigierten Signals.

23. Vorrichtung nach Anspruch 22, wobei die Schätzung des Ungleichgewichts IQ ausgehend von zwei Piloten oder Lehrsequenzen durchgeführt wird,

24. Vorrichtung nach einem der Ansprüche 22 oder 23, wobei die Schätzung des Ungleichgewichts IQ ausgehend von zwei Piloten oder Lehrsequenzen $p_1$ und $p_2$ durchgeführt wird, wobei $p_1$ beispielsweise aus einer pseudoaleatorischen Sequenz gebildet ist und p2 beispielsweise identisch mit $p_1$ auf der ersten Hälfte ihrer Abtastwerte und entgegengesetzt zu $p_1$ auf der zweiten Hälfte ihrer Abtastwerte ist.

**25.** Vorrichtung nach einem der Ansprüche 22 bis 24, wobei die restlichen Ungleichgewichtsvariationen in Funktion von einem Interferenzsignal von Trägerwellen und von Spiegel-Unter-Unterträgern berechnet werden.

**26.** Vorrichtung nach Anspruch 22 bis 25, wobei die restlichen Variationen des Ungleichgewichts nach einem Minimalisierungskriterium der Einhüllenden des Interferenzsignals berechnet werden.

**27.** Vorrichtung nach Anspruch 25 oder 26, wobei die restlichen Ungleichgewichtsvariationen in Funktion von einem für die Einhüllende des Interferenzsignals charakteristischen Parameter $|E|^2$ berechnet werden.

**28.** Vorrichtung nach Anspruch 27, wobei nur die Übergänge des Interferenzsignals berücksichtigt werden.

**29.** Vorrichtung nach Anspruch 28, aufweisend:

- Mittel zum Messen des Werts der komplexen Pilot-Frequenz-Abtastwerte in der Nachbarschaft der Übergänge,
- Mittel zum Vergleich dieser Abtastwerte mit den ausgesendeten Abtastwerten des Piloten und zur Berechnung des für die Einhüllende der Interferenzen der Ungleichgewichte IQ charakteristischen Parameters $|E|^2$.

**30.** Vorrichtung nach einem der Ansprüche 27 bis 29, wobei die Schätzung βest der Ungleichgewichte IQ bezüglich der vorhergehenden Schätzung proportional zu

$$\frac{\partial |E|^2}{\partial \beta'}$$

korrigiert ist, wo β' das restliche Ungleichgewicht IQ darstellt.

**31.** Vorrichtung nach einem der Ansprüche 22 bis 30, wobei die restlichen Ungleichgewichtsvariationen ausgehend von dem durch die schnelle Fourier-Transformierte (FFT) in dem Empfänger erhaltenen Signal erhalten sind.

**32.** Vorrichtung nach einem der Ansprüche 22 bis 31, wobei eine erste Schätzung der Ungleichgewichte IQ nach einer groben Frequenzsynchronisierung durchgeführt wird.

**33.** Vorrichtung nach einem der Ansprüche 22 bis 31, wobei eine erste Schätzung der Ungleichgewichte IQ nach einer Frequenzversatz-Feinkorrektur durchgeführt wird.

**34.** Vorrichtung nach einem der Ansprüche 22 bis 32, aufweisend Mittel zur Kanalschätzung und zur Korrektur dieser Schätzung in Funktion von den Versätzen von Frequenz, Zeitgeber und von den Ungleichgewichten IQ.

**35.** Vorrichtung nach einem der Ansprüche 22 bis 34, wobei die Korrektur der Versätze von Frequenz und Zeitgeber ausgehend von dem durch die schnelle Fourier-Transformierte (FFT) in dem Empfänger erhaltenen Signal (S4) durchgeführt wird.

**36.** Verfahren nach einem der Ansprüche 22 bis 35, wobei die Korrektur der Frequenz- und Zeitgeberversätze ausgehend von einer Kanalschätzung durchgeführt wird.

**37.** Verfahren nach einem der Ansprüche 22 bis 35, wobei die Korrektur der Frequenz- und Zeitgeberversätze ausgehend von zwei Piloten oder Lehrsequenzen $p_1$ und $p_2$ durchgeführt wird, die in der Zeit folgen oder von Datensymbolen durchsetzt sind.

**38.** Verfahren nach einem der Ansprüche 22 bis 37, das ferner Mittel zur Kanalschätzung aufweist.

**39.** Vorrichtung nach Anspruch 38, wobei die Kanalschätzung in Funktion von dem Ungleichgewicht IQ korrigiert wird.

**40.** Vorrichtung nach Anspruch 38 oder 39, wobei die Kanalschätzung in Funktion von den Versätzen von Zeitgeber und/oder von Frequenzen korrigiert wird.

**41.** Informatikprogramm, mit den Anweisungen zur Durchführung eines Verfahrens nach einem der Ansprüche 1 bis 21.

42. Datenträger, der von einem Informatiksystem ausgelesen werden kann, mit Daten in codierter Form, zur Durchführung eines Verfahrens nach einem der Ansprüche 1 bis 21.

43. Software-Produkt mit einem Datenträger, der von einem Informatiksystem ausgelesen werden kann, womit die Durchführung eines Verfahrens nach einem der Ansprüche 1 bis 21 ermöglicht ist.

FIG. 1A

FIG. 1B

FIG. 2A

FIG. 2B

FIG. 3

FIG. 4

**FIG. 5A**

**FIG. 5B**

**FIG. 5C**

FIG. 6A

FIG. 6B

FIG. 7A

FIG. 7B

FIG. 7C

FIG. 7D

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03101064 A